# EUROPEAN PATENT APPLICATION

(11) **EP 4 797 765 A1**
(43) Date of publication of application: **26.08.2026**
(21) Application number: 23956362.0
(22) Date of filing: 24.10.2023
(51) Int. Cl.: H04W 16/28, H04L 5/00, G01S 13/08

(54) **SENSING BEAM TRANSMISSION OR RECEPTION METHOD AND APPARATUS**

(71) Applicant: HUAWEI TECHNOLOGIES CO., LTD., Shenzhen 518129 (CN)
(72) Inventor: PENG, Xiaohui, Shenzhen, Guangdong 518129 (CN); LUO, Jiajin, Shenzhen, Guangdong 518129 (CN); ZHOU, Baojian, Shenzhen, Guangdong 518129 (CN); ZHANG, Ping, Shenzhen, Guangdong 518129 (CN); YU, Yang, Shenzhen, Guangdong 518129 (CN); YAN, Min, Shenzhen, Guangdong 518129 (CN); YANG, Xun, Shenzhen, Guangdong 518129 (CN)
(74) Representative: Isarpatent
(86) International application number: PCT/CN2023/126312
(87) International publication number: WO 2025/086108

(57) **Abstract**

Embodiments of this application provide a sensing beam sending or receiving method and an apparatus, to sense a sensing target. The method includes: A first node determines a plurality of first transmit beams, where the plurality of first transmit beams meet a first relationship, the first relationship indicates an angle relationship between the plurality of first transmit beams, and the plurality of first transmit beams are used to carry a plurality of first signals; and the first node sends the plurality of first transmit beams, where the plurality of first transmit beams are used for sensing.

## Description

### TECHNICAL FIELD

Embodiments of this application relate to the communication field, and more specifically, to a sensing beam sending or receiving method and an apparatus.

### BACKGROUND

In recent years, a wireless sensing technology attracts extensive attention in academia. In the wireless sensing technology, a characteristic of signal propagation space (channel) is obtained by analyzing a change of a wireless signal during propagation, to implement scenario sensing. In sensing application, beam sweeping needs to be performed to improve a signal gain, and a beam needs to have high pointing precision, to implement sensitive tracking and capture of a sensing target. Sensing requires high beam pointing precision, and requires sensitive tracking and capture of an angle change of the sensing target.

However, limited by sweeping precision, a transmit-receive beam pair cannot be completely aligned with the sensing target. Even if the transmit-receive beam pair can be completely aligned with the sensing target, when the sensing target is sensed based on a peak value of a beam, an amplitude change rate at the peak value of the beam is the smallest. Therefore, when the sensing target moves slightly, an amplitude change is very small. This means that a peak location of the beam is insensitive to a change of an angle of the sensing target, aligning with the sensing target based on the peak value of the beam is not conducive to tracking of the moving target.

### SUMMARY

Embodiments of this application provide a sensing beam sending or receiving method and an apparatus, to sense a sensing target.

To achieve the foregoing objective, this application uses the following technical solutions.

According to a first aspect, a sensing beam sending method is provided. The method may be performed by a first node, or may be performed by a component of the first node, for example, a processor, a chip, or a chip system of the first node, or may be implemented by a logical module or software that can implement all or some functions of the first node. For example, the method may be performed by the first node. The method includes: The first node determines a plurality of first transmit beams, where the plurality of first transmit beams meet a first relationship, the first relationship indicates an angle relationship between the plurality of first transmit beams, and the plurality of first transmit beams are used to carry a plurality of first signals; and the first node sends the plurality of first transmit beams, where the plurality of first transmit beams are used for sensing.

According to the sensing beam sending method provided in this embodiment of this application, the first node determines and sends the plurality of first transmit beams that meet the first relationship, so that the first node and a second node can sense a sensing target. When a location of the sensing target does not change, the location of the sensing target determined by the first node and the second node can be more accurate by sending the plurality of first transmit beams. When the location of the sensing target changes, the first node and the second node can track the location of the sensing target by sending the plurality of first transmit beams.

In a possible implementation, that the first relationship indicates the angle relationship between the plurality of first transmit beams includes: The first relationship indicates included angles between the plurality of first transmit beams and a first central axis. In this embodiment of this application, because the included angles between the plurality of first transmit beams and the first central axis meet the first relationship, less information is required for determining the location of the sensing target (for example, angle information of each first transmit beam does not need to be known). This simplifies a procedure of determining the location of the sensing target, and reduces signaling overheads.

In a possible implementation, moduli of angle differences between adjacent first transmit beams in the plurality of first transmit beams are equal. In this embodiment of this application, because the moduli of the angle differences between the adjacent first transmit beams in the plurality of first transmit beams are equal, less information is required for determining the location of the sensing target (for example, angle information of each first transmit beam does not need to be known). This simplifies a procedure of determining the location of the sensing target, and reduces signaling overheads.

In a possible implementation, the angle relationship between the plurality of first transmit beams meets: An included angle between an n^{th} first transmit beam in the plurality of first transmit beams and the first central axis is equal to an included angle between an a^{th} first transmit beam in the plurality of first transmit beams and the first central axis, and an included angle between the n^{th} first transmit beam and an (n+1)^{th} first transmit beam in the plurality of first transmit beams is equal. The n^{th} first transmit beam and the (n+1)^{th} first transmit beam are two spatially adjacent first transmit beams, and n and a are positive integers. In this embodiment of this application, because the plurality of first transmit beams meet the foregoing relationship, less information is required for determining the location of the sensing target (for example, angle information of each first transmit beam does not need to be known). This simplifies a procedure of determining the location of the sensing target, and reduces signaling overheads.

In a possible implementation, the included angle between the n^{th} first transmit beam in the plurality of first transmit beams and the first central axis is represented as $Δψ {1}_{0 , n}^{tx}$, the included angle between the a^{th} first transmit beam in the plurality of first transmit beams and the first central axis is described as $Δψ {1}_{0 , a}^{tx}$, and the included angle between the n^{th} first transmit beam and the (n+1)^{th} first transmit beam is represented as $Δψ {1}_{n , n + 1}^{tx}$. The angle relationship between the plurality of first transmit beams satisfies: $Δψ {1}_{0 , n}^{tx} = Δψ {1}_{0 , a}^{tx} , and Δψ {1}_{n , n + 1}^{tx}$ is equal.

In this embodiment of this application, because the plurality of first transmit beams meet the foregoing relationship, less information is required for determining the location of the sensing target (for example, angle information of each first transmit beam does not need to be known). This simplifies a procedure of determining the location of the sensing target, and reduces signaling overheads.

In this embodiment of this application, that the plurality of first transmit beams are used for sensing includes: The plurality of first transmit beams are used to determine a first location of the sensing target. In this embodiment of this application, the sensing target may be sensed by sending the plurality of first transmit beams, to determine the first location of the sensing target. The first location of the sensing target may be a more accurate location of the sensing target, or may be a location obtained after the sensing target moves. In other words, the plurality of first transmit beams can more accurately determine the location of the sensing target or more accurately track the sensing target.

For example, the first location of the sensing target includes first angle information of the sensing target relative to the first node.

In a possible implementation of this embodiment of this application, the method further includes: The first node receives measurement values of a plurality of first echo signals from the second node, where the plurality of first echo signals are echo signals obtained after the sensing target acts on the plurality of first signals carried on the plurality of first transmit beams; and the first node determines the first location of the sensing target based on the measurement values of the plurality of first echo signals and the first relationship. The first node determines the first location of the sensing target based on the measurement values of the plurality of first echo signals and the first relationship, so that the first node has a stronger control capability.

In a possible implementation of this embodiment of this application, the method further includes: The first node receives the first location of the sensing target from the second node. The first location of the sensing target is determined by the second node based on the first relationship and the measurement values of the plurality of first echo signals, and the plurality of first echo signals are echo signals obtained after the sensing target acts on the plurality of first signals carried on the plurality of first transmit beams. In this embodiment of this application, the method further includes: The first node sends the first relationship to the second node; and the second node determines the first location of the sensing target based on the measurement values of the plurality of first echo signals and the first relationship, so that the second node has a stronger control capability. Alternatively, the method further includes: The first node sends the first relationship to a third node. The third node determines the first location of the sensing target based on the first relationship and the measurement value of the first echo signal, so that the third node is used as a dedicated compute node to determine the first location of the sensing target. In this way, the first node and the second node do not need to perform computing, thereby simplifying a procedure of the first node and the second node.

In this embodiment of this application, the method further includes: The first node determines a plurality of second transmit beams based on the first location of the sensing target, where the plurality of second transmit beams meet a second relationship, the second relationship indicates an angle relationship between the plurality of second transmit beams, and the plurality of second transmit beams are used to carry a plurality of fourth signals; and the first node sends the plurality of second transmit beams, where the plurality of second transmit beams are used for sensing. In this way, the first node and the second node may track the location of the sensing target.

In this embodiment of this application, the method further includes: The first node performs sweeping based on a plurality of first transmit wide beams, and determines a second location of the sensing target based on a measurement value of a second echo signal, where the second echo signal is an echo signal obtained after the sensing target acts on one of a plurality of second signals carried on the plurality of first transmit wide beams; and the first node sends a plurality of first transmit narrow beams in a direction of the second location of the sensing target, and determines a third location of the sensing target based on measurement values of a plurality of third echo signals carried on a plurality of first receive narrow beams, where the plurality of third echo signals are echo signals obtained after the sensing target acts on a plurality of third signals carried on the plurality of first transmit narrow beams. That the first node determines the plurality of first transmit beams includes: determining the plurality of first transmit beams based on the third location of the sensing target. In this way, the first node and the second node can preliminarily determine the third location of the sensing target, and determine the plurality of first transmit beams based on the third location of the sensing target, so that the location of the sensing target is more accurately determined or the sensing target is more accurately tracked through the plurality of first transmit beams.

In this embodiment of this application, the measurement value is a measurement value of signal strength, and/or the measurement value is a measurement value of a signal phase.

In this embodiment of this application, the plurality of first transmit beams are simultaneously sent, or the plurality of first transmit beams are sequentially sent.

According to a second aspect, a sensing beam receiving method is provided. The method may be performed by a second node, or may be performed by a component of the second node, for example, a processor, a chip, or a chip system of the second node, or may be implemented by a logical module or software that can implement all or some functions of the second node. For example, the method may be performed by the second node. The method includes: The second node determines a plurality of first receive beams, where the plurality of first receive beams meet a third relationship, the third relationship indicates an angle relationship between the plurality of first receive beams, the plurality of first receive beams are used to carry a plurality of first echo signals, the plurality of first echo signals are echo signals obtained after a sensing target acts on a plurality of first signals, the plurality of first signals are carried on a plurality of first transmit beams, the plurality of first transmit beams meet a first relationship, and the first relationship indicates an angle relationship between the plurality of first transmit beams; and the second node receives the plurality of first receive beams, where the plurality of first receive beams are used for sensing.

According to the sensing beam receiving method provided in this embodiment of this application, the second node determines and receives the plurality of first receive beams that meet the third relationship, so that the first node and the second node can sense the sensing target. When a location of the sensing target does not change, the location of the sensing target determined by the first node and the second node can be more accurate by receiving the plurality of first receive beams. When the location of the sensing target changes, the first node and the second node can track the location of the sensing target by receiving the plurality of first receive beams.

In a possible implementation, that the third relationship indicates the angle relationship between the plurality of first receive beams includes: The third relationship indicates included angles between the plurality of first receive beams and a second central axis. An angle relationship between the plurality of first receive beams and the second central axis is described. In this embodiment of this application, because the included angles between the plurality of first receive beams and the second central axis meet the third relationship, less information is required for determining the location of the sensing target (for example, angle information of each first receive beam does not need to be known). This simplifies a procedure of determining the location of the sensing target, and reduces signaling overheads.

In a possible implementation, moduli of angle differences between adjacent first receive beams in the plurality of first receive beams are equal. The angle relationship between the plurality of first receive beams is described. In this embodiment of this application, because the moduli of the angle differences between the adjacent first receive beams in the plurality of first receive beams are equal, less information is required for determining the location of the sensing target (for example, angle information of each first receive beam does not need to be known). This simplifies a procedure of determining the location of the sensing target, and reduces signaling overheads.

In a possible implementation, the angle relationship between the plurality of first receive beams meets: An included angle between an m^{th} first receive beam in the plurality of first receive beams and the second central axis is equal to an included angle between a b^{th} first receive beam in the plurality of first receive beams and the second central axis, and an included angle between the m^{th} first receive beam and an (m+1)^{th} first receive beam in the plurality of first receive beams is equal. The m^{th} first receive beam and the (m+1)^{th} first receive beam are two spatially adjacent first receive beams, and m and b are positive integers. In this embodiment of this application, because the plurality of first receive beams meet the foregoing relationship, less information is required for determining the location of the sensing target (for example, angle information of each first receive beam does not need to be known). This simplifies a procedure of determining the location of the sensing target, and reduces signaling overheads.

In a possible implementation, the included angle between the m^{th} first receive beam in the plurality of first receive beams and the second central axis is represented as $Δψ {2}_{0 , m}^{rx}$, the included angle between the b^{th} first receive beam in the plurality of first receive beams and the second central axis is described as $Δψ {2}_{0 , b}^{rx}$, and the included angle between the m^{th} first receive beam and the (m+1)^{th} first receive beam is represented as $Δψ {2}_{m , m + 1}^{rx}$. The angle relationship between the plurality of first receive beams meets the following relationship: $Δψ {2}_{0 , m}^{rx} = Δψ {2}_{0 , b}^{rx} , and Δψ {2}_{m , m + 1}^{rx}$ is equal.

In this embodiment of this application, because the plurality of first receive beams meet the foregoing relationship, less information is required for determining the location of the sensing target (for example, angle information of each first receive beam does not need to be known). This simplifies a procedure of determining the location of the sensing target, and reduces signaling overheads.

In this embodiment of this application, that the plurality of first receive beams are used for sensing includes: The plurality of first receive beams are used to determine a first location of the sensing target. In this embodiment of this application, the sensing target may be sensed by receiving the plurality of first receive beams, to determine the first location of the sensing target. The first location of the sensing target may be a more accurate location of the sensing target, or may be a location obtained after the sensing target moves. In other words, the plurality of first receive beams can more accurately determine the location of the sensing target or more accurately track the sensing target.

For example, the first location of the sensing target includes first angle information of the sensing target relative to the second node.

In this embodiment of this application, the method further includes: The second node measures the plurality of first echo signals, to obtain measurement values of the plurality of first echo signals. In this way, the second node obtains the measurement values of the plurality of first echo signals.

In this embodiment of this application, the method further includes: The second node sends the measurement values of the plurality of first echo signals to the first node, and the first node determines the first location of the sensing target based on the measurement values of the plurality of first echo signals and the first relationship, so that the first node has a stronger control capability. Alternatively, the method further includes: The second node sends the measurement values of the plurality of first echo signals to a third node, and the third node determines the first location of the sensing target based on the first relationship and the measurement value of the first echo signal, so that the third node serves as a dedicated compute node to determine the first location of the sensing target. In this way, the first node and the second node do not need to perform computing, and a procedure of the first node and the second node is simplified. Alternatively, the method further includes: The second node receives the first relationship from the first node; the second node determines the first location of the sensing target based on the first relationship and the measurement values of the plurality of echo signals; and the second node sends the first location of the sensing target to the first node, and the second node determines the first location of the sensing target based on the measurement values of the plurality of first echo signals and the first relationship, so that the second node has a stronger control capability.

In this embodiment of this application, the method further includes: The second node determines a plurality of second receive beams based on the first location of the sensing target, where the plurality of second receive beams meet a fourth relationship, the fourth relationship indicates an angle relationship between the plurality of second receive beams, the plurality of second receive beams are used to carry a plurality of fourth echo signals, the plurality of fourth echo signals are echo signals obtained after the sensing target acts on a plurality of fourth signals, the plurality of fourth signals are carried on a plurality of second transmit beams, the plurality of second transmit beams meet a second relationship, and the second relationship indicates an angle relationship between the plurality of second transmit beams; and the second node receives the plurality of second receive beams, where the plurality of second receive beams are used for sensing. In this way, the first node and the second node may track the location of the sensing target.

In this embodiment of this application, the method further includes: The second node sends a measurement value of a second echo signal, where the measurement value of the second echo signal is used to determine a second location of the sensing target, and the second echo signal is an echo signal obtained after the sensing target acts on one of a plurality of second signals carried on a plurality of first transmit wide beams; and the second node sends measurement values of a plurality of third echo signals carried on a plurality of first receive narrow beams, where the measurement values of the plurality of third echo signals are used to determine a third location of the sensing target, and the plurality of third echo signals are signals obtained after the sensing target acts on a plurality of third signals carried on a plurality of first transmit narrow beams. That the second node determines the plurality of first receive beams includes: determining the plurality of first receive beams based on the third location of the sensing target. In this way, the first node and the second node can preliminarily determine the third location of the sensing target, and determine the plurality of first receive beams based on the third location of the sensing target, so that the location of the sensing target is more accurately determined or the sensing target is more accurately tracked through the plurality of first transmit beams.

In this embodiment of this application, the measurement value is a measurement value of signal strength, and/or the measurement value is a measurement value of a signal phase.

In this embodiment of this application, the plurality of first receive beams are simultaneously received, or the plurality of first receive beams are sequentially received.

According to a third aspect, a sensing beam sending method is provided. The method may be performed by a third node, or may be performed by a component of the third node, for example, a processor, a chip, or a chip system of the third node, or may be implemented by a logical module or software that can implement all or some functions of the third node. For example, the method may be performed by the third node. The method includes: The third node receives a first relationship from a first node and measurement values of a plurality of first echo signals from a second node, where the first relationship indicates an angle relationship between a plurality of first transmit beams, the plurality of first transmit beams are used to carry a plurality of first signals, the plurality of first echo signals are echo signals obtained after a sensing target acts on the first signals, the plurality of first echo signals are carried on a plurality of first receive beams, the plurality of first receive beams meet a third relationship, the third relationship indicates an angle relationship between the plurality of first receive beams, and the plurality of first transmit beams and the plurality of first receive beams are used for sensing; and the third node determines a first location of the sensing target based on the first relationship and the measurement values of the plurality of first echo signals.

According to the sensing beam sending or receiving method provided in this embodiment of this application, the third node determines the first location of the sensing target based on the measurement values of the plurality of first echo signals and the first relationship, so that the third node serves as a dedicated compute node to determine the first location of the sensing target, and the first node and the second node do not need to perform computing. This simplifies procedures of the first node and the second node.

According to a fourth aspect, a communication apparatus is provided, including: a processing module, configured to determine a plurality of first transmit beams, where the plurality of first transmit beams meet a first relationship, the first relationship indicates an angle relationship between the plurality of first transmit beams, and the plurality of first transmit beams are used to carry a plurality of first signals; and a transceiver module, configured to send the plurality of first transmit beams, where the plurality of first transmit beams are used for sensing.

In the communication apparatus provided in this embodiment of this application, that the first relationship indicates the angle relationship between the plurality of first transmit beams includes: The first relationship indicates included angles between the plurality of first transmit beams and a first central axis.

In the communication apparatus provided in this embodiment of this application, moduli of angle differences between adjacent first transmit beams in the plurality of first transmit beams are equal.

In the communication apparatus provided in this embodiment of this application, the angle relationship between the plurality of first transmit beams meets: An included angle between an n^{th} first transmit beam in the plurality of first transmit beams and the first central axis is equal to an included angle between an a^{th} first transmit beam in the plurality of first transmit beams and the first central axis, and an included angle between the n^{th} first transmit beam and an (n+1)^{th} first transmit beam in the plurality of first transmit beams is equal, where the n^{th} first transmit beam and the (n+1)^{th} first transmit beam are two spatially adjacent first transmit beams, and n and a are positive integers.

In the communication apparatus provided in this embodiment of this application, the included angle between the n^{th} first transmit beam in the plurality of first transmit beams and the first central axis is represented as $Δψ {1}_{0 , n}^{tx}$, the included angle between the a^{th} first transmit beam in the plurality of first transmit beams and the first central axis is represented as $Δψ {1}_{0 , a}^{tx}$, and the included angle between the n^{th} first transmit beam and the (n+1)^{th} first transmit beam is represented as $Δψ {1}_{n , n + 1}^{tx}$. The angle relationship between the plurality of first transmit beams satisfies: $Δψ {1}_{0 , n}^{tx} = Δψ {1}_{0 , a}^{tx} , and Δψ {1}_{n , n + 1}^{tx}$ is equal.

In the communication apparatus provided in this embodiment of this application, that the plurality of first transmit beams are used for sensing includes: The plurality of first transmit beams are used to determine a first location of a sensing target.

In the communication apparatus provided in this embodiment of this application, the first location of the sensing target includes first angle information of the sensing target relative to a first node.

In the communication apparatus provided in this embodiment of this application, the transceiver module is further configured to receive measurement values of a plurality of first echo signals from a second node, where the plurality of first echo signals are echo signals obtained after the sensing target acts on the plurality of first signals carried on the plurality of first transmit beams; and the processing module is further configured to determine the first location of the sensing target based on the measurement values of the plurality of first echo signals and the first relationship.

In the communication apparatus provided in this embodiment of this application, the transceiver module is further configured to receive the first location of the sensing target from the second node. The first location of the sensing target is determined by the second node based on the first relationship and the measurement values of the plurality of first echo signals, and the plurality of first echo signals are echo signals obtained after the sensing target acts on the plurality of first signals carried on the plurality of first transmit beams.

In the communication apparatus provided in this embodiment of this application, the transceiver module is further configured to send the first relationship to the second node, or the transceiver module is further configured to send the first relationship to a third node.

In the communication apparatus provided in this embodiment of this application, the processing module is further configured to determine a plurality of second transmit beams based on the first location of the sensing target, where the plurality of second transmit beams meet a second relationship, the second relationship indicates an angle relationship between the plurality of second transmit beams, and the plurality of second transmit beams are used to carry a plurality of fourth signals; and the transceiver module is further configured to send the plurality of second transmit beams, where the plurality of second transmit beams are used for sensing.

In the communication apparatus provided in this embodiment of this application, the transceiver module is further configured to perform sweeping based on a plurality of first transmit wide beams, and the processing module is further configured to determine a second location of the sensing target based on a measurement value of a second echo signal. The second echo signal is an echo signal obtained after the sensing target acts on one of a plurality of second signals carried on the plurality of first transmit wide beams. The transceiver module is further configured to send a plurality of first transmit narrow beams in a direction of the second location of the sensing target, and the processing module is further configured to determine a third location of the sensing target based on measurement values of a plurality of third echo signals carried on a plurality of first receive narrow beams. The plurality of third echo signals are echo signals obtained after the sensing target acts on a plurality of third signals carried on the plurality of first transmit narrow beams. That the processing module is further configured to determine the plurality of first transmit beams includes: The processing module is further configured to determine the plurality of first transmit beams based on the third location of the sensing target.

In the communication apparatus provided in this embodiment of this application, the measurement value is a measurement value of signal strength, and/or the measurement value is a measurement value of a signal phase.

In the communication apparatus provided in this embodiment of this application, the plurality of first transmit beams are simultaneously sent, or the plurality of first transmit beams are sequentially sent.

According to a fifth aspect, a communication apparatus is provided, including: a processing module, configured to determine a plurality of first receive beams, where the plurality of first receive beams meet a third relationship, the third relationship indicates an angle relationship between the plurality of first receive beams, the plurality of first receive beams are used to carry a plurality of first echo signals, the plurality of first echo signals are echo signals obtained after a sensing target acts on a plurality of first signals, the plurality of first signals are carried on a plurality of first transmit beams, the plurality of first transmit beams meet a first relationship, and the first relationship indicates an angle relationship between the plurality of first transmit beams; and a transceiver module, configured to receive the plurality of first receive beams, where the plurality of first receive beams are used for sensing.

In the communication apparatus provided in this embodiment of this application, that the third relationship indicates the angle relationship between the plurality of first receive beams includes: The third relationship indicates included angles between the plurality of first receive beams and a second central axis.

In the communication apparatus provided in this embodiment of this application, moduli of angle differences between adjacent first receive beams in the plurality of first receive beams are equal.

In the communication apparatus provided in this embodiment of this application, the angle relationship between the plurality of first receive beams meets: An included angle between an m^{th} first receive beam in the plurality of first receive beams and the second central axis is equal to an included angle between a b^{th} first receive beam in the plurality of first receive beams and the second central axis, and an included angle between the m^{th} first receive beam and an (m+1)^{th} first receive beam in the plurality of first receive beams is equal. The m^{th} first receive beam and the (m+1)^{th} first receive beam are two spatially adjacent first receive beams, and m and b are positive integers.

In the communication apparatus provided in this embodiment of this application, the included angle between the m^{th} first receive beam in the plurality of first receive beams and the second central axis is represented as $Δψ {2}_{0 , m}^{rx}$, the included angle between the b^{th} first receive beam in the plurality of first receive beams and the second central axis is represented as $Δψ {2}_{0 , b}^{rx}$, and the included angle between the m^{th} first receive beam and the (m+1)^{th} first receive beam is represented as $Δψ {2}_{m , m + 1}^{rx}$. The angle relationship between the plurality of first receive beams meets the following relationship: $Δψ {2}_{0 , m}^{rx} = Δψ {2}_{0 , b}^{rx} , and Δψ {2}_{m , m + 1}^{rx}$ is equal.

In the communication apparatus provided in this embodiment of this application, that the plurality of first receive beams are used for sensing includes: The plurality of first receive beams are used to determine a first location of the sensing target.

In the communication apparatus provided in this embodiment of this application, the first location of the sensing target includes first angle information of the sensing target relative to a second node.

In the communication apparatus provided in this embodiment of this application, the processing module is further configured to measure the plurality of first echo signals, to obtain measurement values of the plurality of first echo signals.

In the communication apparatus provided in this embodiment of this application, the transceiver module is further configured to send the measurement values of the plurality of first echo signals to a first node, or send the measurement values of the plurality of first echo signals to a third node, or send the first location of the sensing target to the first node.

In the communication apparatus provided in this embodiment of this application, the transceiver module is further configured to receive the first relationship from the first node. The processing module is further configured to determine the first location of the sensing target based on the first relationship and the measurement values of the plurality of first echo signals.

In the communication apparatus provided in this embodiment of this application, the processing module is further configured to determine a plurality of second receive beams based on the first location of the sensing target, where the plurality of second receive beams meet a fourth relationship, the fourth relationship indicates an angle relationship between the plurality of second receive beams, the plurality of second receive beams are used to carry a plurality of fourth echo signals, the plurality of fourth echo signals are echo signals obtained after the sensing target acts on a plurality of fourth signals, the plurality of fourth signals are carried on a plurality of second transmit beams, the plurality of second transmit beams meet a second relationship, and the second relationship indicates an angle relationship between the plurality of second transmit beams; and the transceiver module is further configured to receive the plurality of second receive beams, where the plurality of second receive beams are used for sensing.

In the communication apparatus provided in this embodiment of this application, the transceiver module is further configured to send a measurement value of a second echo signal, where the measurement value of the second echo signal is used to determine a second location of the sensing target, and the second echo signal is an echo signal obtained after the sensing target acts on one of a plurality of second signals carried on a plurality of first transmit wide beams; and the transceiver module is further configured to send measurement values of a plurality of third echo signals carried on a plurality of first receive narrow beams, where the measurement values of the plurality of third echo signals are used to determine a third location of the sensing target, and the plurality of third echo signals are signals obtained after the sensing target acts on a plurality of third signals carried on a plurality of first transmit narrow beams. That the processing module is further configured to determine the plurality of first receive beams includes: determining the plurality of first receive beams based on the third location of the sensing target.

In the communication apparatus provided in this embodiment of this application, the measurement value is a measurement value of signal strength, and/or the measurement value is a measurement value of a signal phase.

In the communication apparatus provided in this embodiment of this application, the plurality of first receive beams are simultaneously received, or the plurality of first receive beams are sequentially received.

According to a sixth aspect, a communication apparatus is provided, including: a transceiver module, configured to receive a first relationship from a first node and measurement values of a plurality of first echo signals from a second node, where the first relationship indicates an angle relationship between a plurality of first transmit beams, the plurality of first transmit beams are used to carry a plurality of first signal, the plurality of first echo signals are echo signals obtained after a sensing target acts on the first signals, the plurality of first echo signals are carried on a plurality of first receive beams, the plurality of first receive beams meet a third relationship, the third relationship indicates an angle relationship between the plurality of first receive beams, and the plurality of first transmit beams and the plurality of first receive beams are used for sensing; and a processing module, configured to determine a first location of the sensing target based on the first relationship and the measurement values of the plurality of first echo signals.

According to a seventh aspect, a communication apparatus is provided, to implement the foregoing methods. The communication apparatus may be the first node in the first aspect, or an apparatus included in the first node, for example, a chip; or the communication apparatus may be the second node in the second aspect, or an apparatus included in the second node, for example, a chip; or the communication apparatus may be the third node in the third aspect, or an apparatus included in the third node, for example, a chip.

The communication apparatus includes a corresponding module, unit, or means (means) for implementing the foregoing method. The module, unit, or means (means) may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), respectively configured to implement output (or sending) and input (or receiving) functions according to any one of the foregoing aspects and any possible design of the foregoing aspects. The processing module may be configured to implement a processing function according to any one of the foregoing aspects and any possible design of the foregoing aspects.

Optionally, the communication apparatus further includes a storage module, configured to store program instructions and data.

According to an eighth aspect, a communication apparatus is provided, including at least one processor. The processor is configured to run a computer program or instructions, or is configured to enable, through a logic circuit, the communication apparatus to perform the method according to any one of the foregoing aspects. The communication apparatus may be the first node in the first aspect, or an apparatus included in the first node, for example, a chip; or the communication apparatus may be the second node in the second aspect, or an apparatus included in the second node, for example, a chip; or the communication apparatus may be the third node in the third aspect, or an apparatus included in the third node, for example, a chip.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, and is configured to read and write computer instructions. For example, the interface circuit is configured to receive computer-executable instructions (where the computer-executable instructions are stored in the memory, and may be directly read from the memory, or may be read via another component), and transmit the computer-executable instructions to the processor.

In some possible designs, the communication interface is configured to communicate with a module other than the communication apparatus.

In some possible designs, the communication apparatus may be a chip system. When the communication apparatus is the chip system, the chip system may include a chip, or may include the chip and another discrete component.

According to a ninth aspect, a communication apparatus is provided, including a logic circuit and an interface circuit. The interface circuit is configured to input information and/or output information. The logic circuit is configured to perform the method according to any one of the foregoing aspects, to perform processing based on input information and/or generate output information. The communication apparatus may be the first node in the first aspect, or an apparatus included in the first node, for example, a chip; or the communication apparatus may be the second node in the second aspect, or an apparatus included in the second node, for example, a chip; or the communication apparatus may be the third node in the third aspect, or an apparatus included in the third node, for example, a chip.

It may be understood that when the communication apparatus provided in any one of the fourth aspect to the sixth aspect is a chip, the sending action/function may be understood as output information, and the receiving action/function may be understood as input information.

According to a tenth aspect, a computer-readable storage medium is provided. The computer-readable storage medium stores a computer program or instructions, and when the computer program or the instructions are executed by a processor, the method in any one of the foregoing aspects is performed.

According to an eleventh aspect, a computer program product is provided. When the computer program product is executed by a processor, the method according to any one of the foregoing aspects is performed.

According to a twelfth aspect, a communication apparatus is provided. The communication apparatus includes a module/unit configured to perform the method according to the first aspect, the second aspect, or the third aspect.

According to a thirteenth aspect, a communication system is provided. The communication system includes the first node according to the first aspect, the second node according to the second aspect, and the third node according to the second aspect. The first node, the second node, and the third node may be implemented as the communication apparatus provided in any one of the fourth aspect to the sixth aspect.

For technical effect brought by any design manner in the fourth aspect to the thirteenth aspect, refer to technical effect brought by different design manners in the first aspect, the second aspect, or the third aspect. Details are not described herein again.

### BRIEF DESCRIPTION OF DRAWINGS

FIG. 1 is a diagram of a beam sweeping procedure of a communication system according to an embodiment of this application;
FIG. 2 is a diagram of a system architecture according to an embodiment of this application;
FIG. 3 is a diagram of an application scenario according to an embodiment of this application;
FIG. 4 is a diagram of a structure of a communication device 400 according to an embodiment of this application;
FIG. 5A and FIG. 5B are a diagram of an example of a sensing beam sending or receiving method according to an embodiment of this application;
FIG. 6 is a diagram of a first relationship in two-dimensional space according to an embodiment of this application;
FIG. 7 is a diagram of a relative location relationship between a sensing target, a first node, and a second node;
FIG. 8 is a diagram of an example of a sensing beam sending or receiving method according to an embodiment of this application;
FIG. 9 is a diagram of another example of a sensing beam sending or receiving method according to an embodiment of this application;
FIG. 10 is a diagram of another example of a sensing beam sending or receiving method according to an embodiment of this application;
FIG. 11 is a diagram in which a first node/a second node/a third node determines a first location of a sensing target based on measurement values of a plurality of first echo signals and a plurality of first relationships according to an embodiment of this application; and
FIG. 12 is a diagram of a communication apparatus according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, and (or) c may indicate a, b, c, "a and b", "a and c", "b and c", or "a, b, and c", where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It can be understood that an "embodiment" mentioned throughout this specification means that particular features, structures, or characteristics related to the embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, for same or similar parts of embodiments, mutual reference may be made between the embodiments, unless otherwise specified. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application do not constitute a limitation on the protection scope of this application.

For ease of understanding of the technical solutions in embodiments of this application, the following first briefly describes technologies and terms related to this application.

### 1. A communication system beam sweeping procedure

In a communication system, a beamforming technology may be used to weight a transmit signal, to form a narrow beam that points to a specific direction and that has more concentrated energy and stronger directivity. Because coverage of a single narrow beam is limited, the beam cannot completely cover all users in a cell, and it cannot be ensured that each user in the cell can obtain maximum signal energy. Therefore, beam sweeping is introduced. Narrow beams are transmitted or received in different directions at different moments through beam sweeping, so that a specific spatial area can be covered, and coverage performance can be improved.

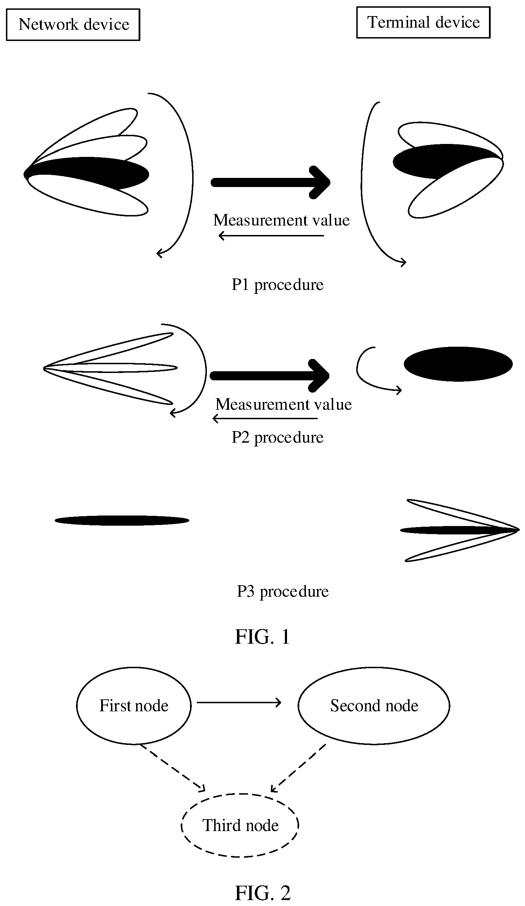

To improve communication quality, a most appropriate pair of a transmit beam and a receive beam needs to be identified, so that a direction of the transmit beam is aligned with a direction of the receive beam, and a gain of a received signal is maximized, that is, a random access procedure of a terminal device is completed. Therefore, a sweeping procedure is introduced in communication, beam measurement, beam reporting, and beam determining are combined, and an optimal pair of a transmit beam and a receive beam is selected. FIG. 1 is a diagram of a beam sweeping procedure of a communication system according to an embodiment of this application. As shown in FIG. 1, the beam sweeping procedure includes the following steps.

A P1 procedure is used to identify an initial beam pair between a transmitter and a receiver. A network device may use synchronization signal block (synchronization signal/physical broadcast channel (physical broadcast channel, PBCH) block, SSB) beam sweeping, and the terminal device may use wide beam sweeping.

In the P1 procedure provided in this embodiment of this application, in a cell search and selection process, the network device may send SSBs in different directions in a time division manner through SSB beam sweeping, and broadcast a synchronization message and a system message.

In a random access process, the terminal device receives a signal through beam sweeping, and determines a receive beam. Further, the terminal device sends a measurement value of the SSB to the network device, and the network device determines one of transmit beams based on the measurement value. The transmit beam and the receive beam are preliminarily aligned.

A P2 procedure is used to refine a transmit beam on a network device side. After the initial beam pair is established, to obtain a higher signal gain, a channel state information-reference signal (channel state information-reference signal, CSI-RS) narrower than an SSB beam needs to be selected for beam adjustment.

In the P2 procedure provided in this embodiment of this application, after a radio resource control protocol (radio resource control, RRC) connection is established, the network device may perform beam adjustment based on the preliminarily aligned SSB beams in the P1 procedure. Within a width range of the preliminarily aligned SSB beams, a plurality of narrower CSI-RS beams are used for sweeping again.

The terminal device receives the plurality of CSI-RS beams, and sends corresponding measurement values of the plurality of CSI-RSs to the network device. The network device determines an optimal CSI-RS beam based on the measurement values of the plurality of CSI-RSs.

A P3 procedure is used to refine a receive beam on a terminal device side. The receive beam of the terminal device is further adjusted to enhance signal quality.

In the P3 procedure provided in this embodiment of this application, the network device fixes the optimal CSI-RS beam, and sends the CSI-RS signal to the terminal device through the optimal CSI-RS beam.

The terminal device receives the CSI-RS signal through narrow beam sweeping. The terminal device receives the CSI-RS signal on one of the narrow beams, and then the terminal device fixes the narrow beam that carries the CSI-RS signal. In other words, the terminal device determines a finer receive beam. Finally, the transmit beam and the receive beam are aligned.

FIG. 2 is a diagram of a system architecture according to an embodiment of this application. As shown in FIG. 2, the communication system mainly includes a first node and a second node. The first node may be a transmitter, and is configured to send a plurality of first transmit beams. The second node may be a receiver, and is configured to receive a plurality of first receive beams.

In this embodiment of this application, the first node may be a network device or a terminal device, and the second node may be a network device or a terminal device. Optionally, the communication system may further include a third node, and the third node may be a network device or a terminal device.

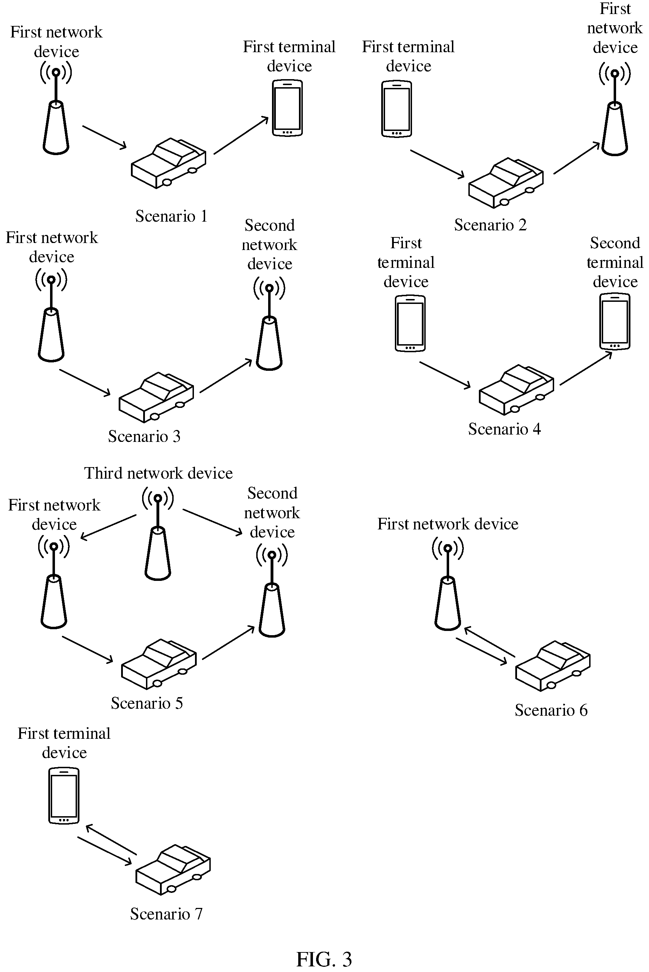

This embodiment of this application is mainly applied to a sensing scenario, and may include seven scenarios shown in FIG. 3.

Scenario 1: A first network device serves as a transmitter and a control end, and a first terminal device serves as a receiver. A signal transmitted by the first network device is received by the first terminal device after a sensing target acts on the signal. After receiving the signal on which the sensing target acts, the first terminal device performs signal processing to obtain a measurement value of the signal, and sends the measurement value of the signal to the first network device. The first network device performs processing based on the measurement value of the signal to obtain a sensing result.

Scenario 2: A first terminal device serves as a transmitter, and a first network device serves as a receiver and a control end. A signal transmitted by the first terminal device is received by the first network device after a sensing target acts on the signal. After receiving the signal on which the sensing target acts, the first network device performs signal processing to obtain a measurement value of the signal, and performs processing based on the measurement value of the signal to obtain a sensing result.

Scenario 3: A first network device serves as a transmitter and a control end, and a second network device serves as a receiver. A signal transmitted by the first network device is received by the second network device after a sensing target acts on the signal. After receiving the signal on which the sensing target acts, the second network device performs signal processing to obtain a measurement value of the signal, and sends the measurement value of the signal to the first network device. The first network device performs processing based on the measurement value of the signal to obtain a sensing result.

Scenario 4: A first terminal device serves as a transmitter and a control end, and a second terminal device serves as a receiver. A signal transmitted by the first terminal device is received by the second terminal device after a sensing target acts on the signal. After receiving the signal on which the sensing target acts, the second terminal device performs signal processing to obtain a measurement value of the signal, and sends the measurement value of the signal to the first terminal device. The first terminal device performs processing based on the measurement value of the signal to obtain a sensing result.

Scenario 5: A first network device serves as a transmitter, a second network device serves as a receiver, and a third network device serves as a control end. A signal transmitted by the first network device is received by the second network device after a sensing target acts on the signal. After receiving the signal on which the sensing target acts, the second network device performs signal processing to obtain a measurement value of the signal, and sends the measurement value of the signal to the third network device. The third network device performs processing to obtain a sensing result.

Scenario 6: A first network device serves as a transmitter, a receiver, and a control end. A signal transmitted by the first network device is received by the first network device after a sensing target acts on the signal. After receiving the signal on which the sensing target acts, the first network device performs signal processing to obtain a measurement value of the signal, and performs processing based on the measurement value of the signal to obtain a sensing result.

Scenario 7: A first terminal device serves as a transmitter, a receiver, and a control end. A signal transmitted by the first terminal device is received by the first terminal device after a sensing target acts on the signal. After receiving the signal on which the sensing target acts, the first terminal device performs signal processing to obtain a measurement value of the signal, and performs processing based on the measurement value of the signal to obtain a sensing result.

In the foregoing scenarios in this embodiment of this application, the control end is configured to perform processing based on the measurement value of the signal to obtain the sensing result. An action mechanism of the sensing target may include reflection, diffraction, scattering, and the like. This is not limited in embodiments of this application.

It should be understood that the first network device, the second network device, and the third network device in the foregoing scenarios are intended to distinguish between different network devices to describe application scenarios of embodiments of this application, and do not constitute a limitation. The first terminal device and the second terminal device in the foregoing scenarios are intended to distinguish between different terminal devices to describe application scenarios of embodiments of this application, and do not constitute a limitation.

In embodiments of this application, the sensing target includes but is not limited to a vehicle, a low-altitude uncrewed aerial vehicle, a moving or static object, and a terminal device having a communication function. The sensing result corresponding to the sensing target includes but is not limited to a distance, a speed, an angle, intensity, and the like. In FIG. 3 shown in this embodiment of this application, an example in which the sensing target is a vehicle is used for description.

Optionally, embodiments of this application may be applied to a 5th generation (5th generation, 5G) mobile communication technology, or may be applied to another communication system, for example, a future 6th generation (6th generation, 6G) mobile communication technology. This is not specifically limited in embodiments of this application.

Optionally, the terminal device in this application may be user equipment (user equipment, UE), an access terminal, a terminal unit, a subscriber station, a terminal station, a mobile station, a mobile console, a remote station, a remote terminal, a user terminal (terminal equipment, TE), a mobile device, a wireless communication device, a terminal agent, a tablet computer (pad), a handheld device with a wireless communication function, a compute device or another processing device connected to a wireless modem, a vehicle-mounted device, a vehicle-mounted transceiver unit, a wearable device, or a terminal apparatus in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, an uncrewed aerial vehicle, a robot, a smart point of sale (point of sale, POS) terminal, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in internet of things (internet of things, IoT), for example, a terminal in V2X (for example, an internet of vehicles device), a terminal in D2D communication, or a terminal in M2M communication. The terminal may be mobile or fixed.

Optionally, the network device (for example, the first network device, the second network device, or the third network device) in this application may be a device configured to communicate with the terminal device. For example, the network device may include an evolved NodeB (NodeB, eNB, or e-NodeB, evolved NodeB) in an LTE system or an LTE-A system, for example, a conventional macro base station eNB and a micro base station eNB in a heterogeneous network scenario, may include next generation NodeB (next generation NodeB, gNB) in an NR system; or may include a transmission reception point (transmission reception point, TRP), a home NodeB (for example, home evolved NodeB or home NodeB, HNB), a baseband unit (baseband unit, BBU), a baseband unit pool (BBU pool), a wireless fidelity (wireless fidelity, Wi-Fi) access point (access point, AP), and the like; or may include a base station in a non-terrestrial network (non-terrestrial network, NTN), that is, may be deployed on an airplane platform or a satellite. In the NTN, the network device may be used as a layer 1 (L1) relay (relay), may be used as a base station, or may be used as an integrated access and backhaul (integrated access and backhaul, IAB) node. Alternatively, the network device may be a device that is in an IoT and that implements functions of a base station, for example, a device that is in uncrewed aerial vehicle communication, V2X, D2D, or machine-to-machine (machine-to-machine, M2M) and that implements the functions of the base station.

In some possible scenarios, the network device may alternatively be a module or unit that can implement some functions of a base station. For example, the access device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings of the names. For example, the access network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

It should be noted that the communication systems described in embodiments of this application are intended to describe the technical solutions in embodiments of this application more clearly, but do not constitute a limitation on the technical solutions provided in embodiments of this application. It can be learned by a person of ordinary skill in the art that the technical solutions provided in embodiments of this application are also applicable to similar technical problems with evolution of a network architecture and emergency of a new service scenario.

Optionally, related functions of the first node, the second node, and the third node in this application may be implemented by one device, or may be jointly implemented by a plurality of devices, or may be implemented by one or more functional modules in one device, or may be implemented by one or more chips, or may be a system on chip (system on chip, SOC) or a chip system. The chip system may include a chip, or may include a chip and another discrete device. This is not specifically limited in embodiments of this application.

It may be understood that the foregoing function may be a network element in a hardware device, may be a software function running on dedicated hardware, a combination of hardware and software, or a virtualization function instantiated on a platform (for example, a cloud platform).

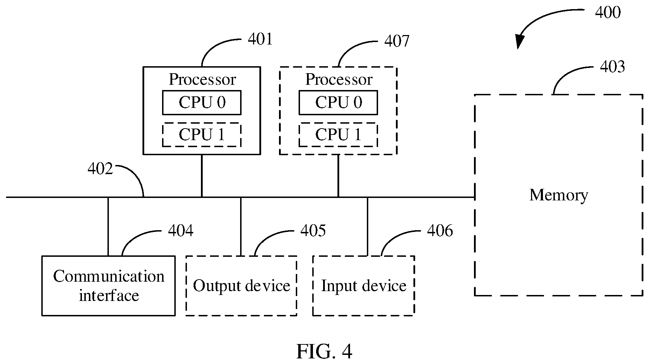

For example, related functions of the first node, the second node, and the third node in this application may be implemented by using a communication device 400 in FIG. 4. FIG. 4 is a diagram of a structure of the communication device 400 according to an embodiment of this application. The communication device 400 includes one or more processors 401, a communication line 402, and at least one communication interface (where in FIG. 4, only an example in which a communication interface 404 and one processor 401 are included is used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for connecting different components.

The communication interface 404 may be a transceiver module configured to communicate with another device or a communication network, such as an Ethernet, a RAN, or a wireless local area network (wireless local area network, WLAN). For example, the transceiver module may be an apparatus such as a transceiver or a transceiver. Optionally, the communication interface 404 may alternatively be a transceiver circuit located in the processor 401, configured to implement signal input and signal output of the processor.

The memory 403 may be an apparatus having a storage function. For example, the memory 403 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement the sensing beam sending or receiving method provided in embodiments of this application.

Alternatively, optionally, in embodiments of this application, the processor 401 may perform a processing-related function in the sensing beam sending or receiving method provided in the following embodiments of this application, and the communication interface 404 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication device 400 may include a plurality of processors, for example, the processor 401 and a processor 407 in FIG. 4. Each of the processors may be a single-core (single-core) processor or may be a multi-core (multi-core) processor. The processor herein may include but is not limited to at least one of the following: various compute devices that run software, such as a central processing unit (central processing unit, CPU), a microprocessor, a digital signal processor (DSP), a microcontroller unit (microcontroller unit, MCU), or an artificial intelligence processor. Each type of compute device may include one or more cores for executing software instructions to perform an operation or processing.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The communication device 400 may also be referred to as a communication apparatus sometimes, and may be a general-purpose device or a dedicated device. For example, the communication device 400 may be a desktop computer, a portable computer, a network server, a palmtop computer (personal digital assistant, PDA), a mobile phone, a tablet computer, a wireless terminal device, an embedded device, the foregoing terminal, the foregoing network device, or a device having a structure similar to that in FIG. 4. A type of the communication device 400 is not limited in embodiments of this application.

In addition, the composition structure shown in FIG. 4 does not constitute a limitation on the communication apparatus. In addition to the components shown in FIG. 4, the communication apparatus may include more or fewer components than those shown in the figure, or a combination of a part of the components, or an arrangement of different components.

With reference to the communication system shown in FIG. 2, the following describes the sensing beam sending or receiving method provided in embodiments of this application.

It should be noted that in the following embodiments of this application, a name of a message between network elements, a name of each parameter, a name of each piece of information, or the like is merely an example, and may be another name in another embodiment. This is not specifically limited in the method provided in this application.

It may be understood that in embodiments of this application, each network element may perform some or all of the steps in embodiments of this application. These steps or operations are merely examples. In embodiments of this application, other operations or variations of various operations may be further performed. In addition, the steps may be performed in an order different from an order shown in embodiments of this application, and not all of operations in embodiments of this application may be performed.

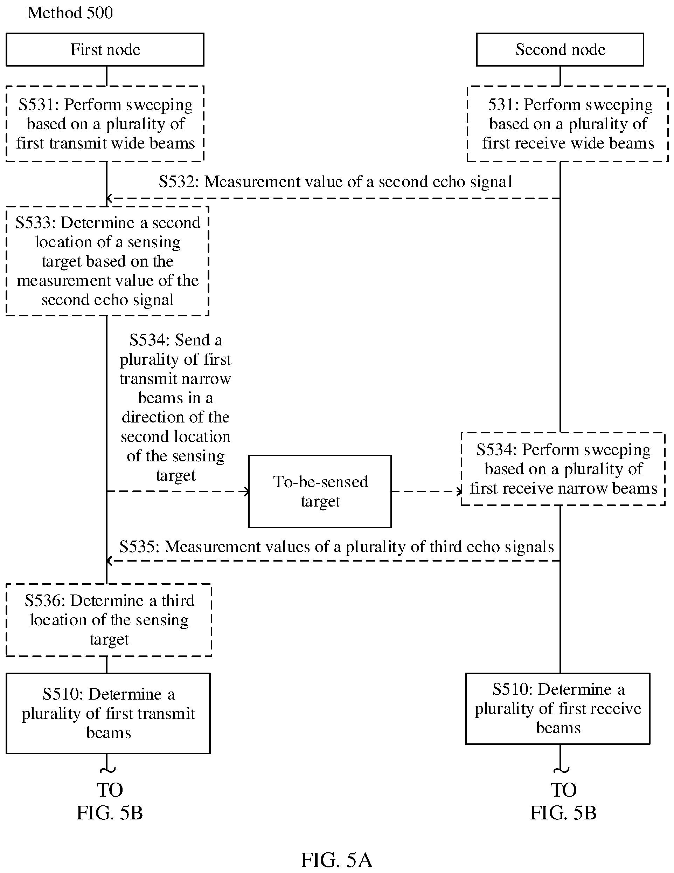

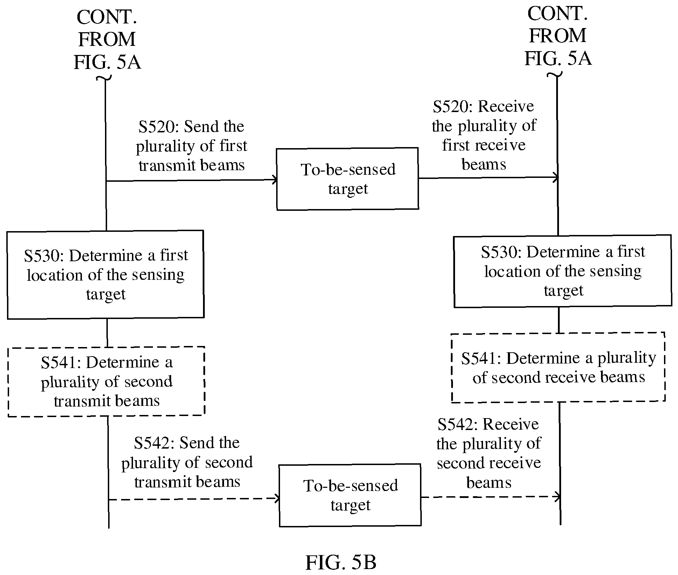

FIG. 5A and FIG. 5B are a diagram of an example of a sensing beam sending or receiving method according to an embodiment of this application. The method is described by using interaction between a first node and a second node as an example. Certainly, an action of the first node in the method may alternatively be performed by an apparatus/module in the first node, for example, a chip, a processor, or a processing unit in the first node. An action of the second node in the method may alternatively be performed by an apparatus/module in the second node, for example, a chip, a processor, or a processing unit in the second node. This is not specifically limited in embodiments of this application. In this embodiment of this application, the first node may be a network device, and the second node may be a network device or a terminal device. In this embodiment of this application, processing performed by a single execution body (for example, the first node or the second node) may also be divided into processing performed by a plurality of execution bodies, and these execution bodies may be logically and/or physically separated. For example, processing performed by the network device may be performed by at least one of a CU, a DU, and an RU. For another example, processing performed by the network device may be performed by at least one of an O-CU (an O-CU-CP in the O-CU or an O-CU-UP in the O-CU), an O-DU, and an O-RU in an ORAN system. For example, as shown in FIG. 5A and FIG. 5B, the sensing beam sending or receiving method 500 provided in this embodiment of this application includes the following steps.

S510: The first node determines a plurality of first transmit beams. Correspondingly, the second node determines a plurality of first receive beams.

In this embodiment of this application, the plurality of first transmit beams meet a first relationship, and the first relationship indicates an angle relationship between the plurality of first transmit beams.

For example, that the first relationship indicates the angle relationship between the plurality of first transmit beams includes: The first relationship indicates included angles between the plurality of first transmit beams and a first central axis.

For example, moduli of angle differences between adjacent first transmit beams in the plurality of first transmit beams are equal; or two adjacent transmit beams in the plurality of first transmit beams are equally spaced; or the plurality of first transmit beams are centrosymmetric with respect to the first central axis. This is not limited in embodiments of this application.

In this embodiment of this application, a direction of the first central axis may be a direction indicated by second angle information or third angle information of a sensing target relative to the first node. For the second angle information or the third angle information, refer to the following steps S531 to S536. Details are not described herein again.

In this embodiment of this application, the angle relationship between the plurality of first transmit beams meets: An included angle between an n^{th} first transmit beam in the plurality of first transmit beams and the first central axis is equal to an included angle between an a^{th} first transmit beam in the plurality of first transmit beams and the first central axis, and an included angle between the n^{th} first transmit beam and an (n+1)^{th} first transmit beam in the plurality of first transmit beams is equal. The n^{th} first transmit beam and the (n+1)^{th} first transmit beam are two spatially adjacent first transmit beams, and a and n are positive integers. For example, an included angle between a 1^{st} first transmit beam in the plurality of first transmit beams and the first central axis is 5 degrees, and an included angle between a 3^{rd} first transmit beam and the first central axis is also 5 degrees, or an included angle between another first transmit beam and the first central axis is also 5 degrees. For example, an included angle between the 1^{st} first transmit beam and a 2^{nd} first transmit beam is equal to an included angle between the 2^{nd} first transmit beam and the 3^{rd} first transmit beam, and an included angle between a last first transmit beam and the 1^{st} first transmit beam is equal to the included angle between the 1^{st} first transmit beam and the 2^{nd} first transmit beam. The rest can be deduced by analogy. This is not limited in embodiments of this application.

For example, the included angle between the n^{th} first transmit beam in the plurality of first transmit beams and the first central axis is represented as $Δψ {1}_{0 , n}^{tx}$, the included angle between the a^{th} first transmit beam in the plurality of first transmit beams and the first central axis is represented as $Δψ {1}_{0 , a}^{tx}$, and the included angle between the n^{th} first transmit beam and the (n+1)^{th} first transmit beam is represented as $Δψ {1}_{n , n + 1}^{tx}$*.* The angle relationship between the plurality of first transmit beams satisfies: $Δψ {1}_{0 , n}^{tx} = Δψ {1}_{0 , a}^{tx} , and Δψ {1}_{n , n + 1}^{tx}$ is equal.

In this embodiment of this application, $Δψ {1}_{0 , n}^{tx} = acos \left({\vec{v 1}}_{0}⋅{\vec{v 1}}_{n}\right)$, and $Δψ {1}_{n , n + 1}^{tx} = acos \left({\vec{v 1}}_{n}⋅{\vec{v 1}}_{n + 1}\right)$, where *̅v̅*̅1̅₀ represents a vector corresponding to the first central axis, *̅v̅*̅1̅ₙ represents a vector corresponding to the n^{th} first transmit beam, and *̅v̅*̅1̅_{*n*+1} represents a vector corresponding to the (n+1)^{th} first transmit beam.

It should be noted that $Δψ {1}_{1 , N}^{tx} = Δψ {1}_{n , n + 1}^{tx}$, where $Δψ {1}_{1 , N}^{tx}$ represents an included angle between the 1^{st} first transmit beam and an N^{th} first transmit beam, n ∈ [1, N - 1], and N is a positive integer.

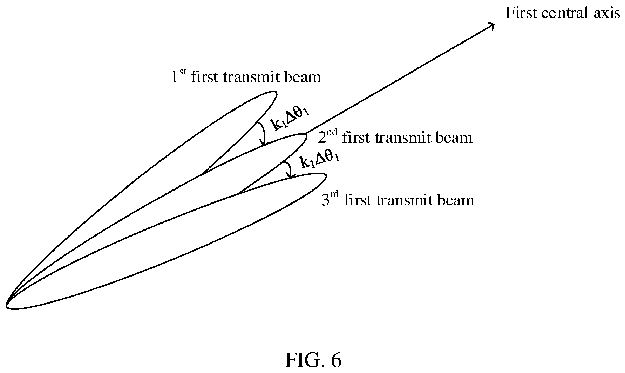

In this embodiment of this application, FIG. 6 is a diagram of the first relationship in two-dimensional space according to an embodiment of this application. As shown in FIG. 6, a first symmetry axis ${\vec{v 1}}_{0} = \left(θ{1}_{0}^{tx},ϕ{1}_{0}^{tx}\right)$, and ${\vec{v 1}}_{n} = \left(θ{1}_{n}^{tx},ϕ{1}_{n}^{tx}\right)$*.* FIG. 6 shows three cases in which n is 1, 2, and 3, namely, the 1^{st} first transmit beam, the 2^{nd} first transmit beam, and the 3^{rd} first transmit beam. The three first transmit beams are symmetrical with respect to the first central axis.

In this embodiment of this application, the plurality of first transmit beams may also meet the first relationship in three-dimensional space, where *̅v̅*̅1̅₀ = (*x*1₀, *y*1₀, *z*1₀), *̅v̅*̅1̅*ₙ*=(*x*1*ₙ*, *y*1ₙ, *z*1*ₙ*), and *̅v̅*̅1̅₀ · v̅1̅*ₙ* = *x*1₀*x*1*ₙ* + *y*1₀*y*1*ₙ* + *z*1₀*z*1*ₙ*.

For example, $Δψ {1}_{0 , n}^{tx}$ may be k₁Δθ₁. In a possible implementation, a value range of k₁ is [0.01, 2], and Δθ₁ is angular resolution.

In this embodiment of this application, the plurality of first receive beams meet a third relationship, and the third relationship indicates an angle relationship between the plurality of first receive beams.

For example, that the third relationship indicates the angle relationship between the plurality of first receive beams includes: The first relationship indicates included angles between the plurality of first receive beams and a second central axis.

For example, moduli of angle differences between adjacent first receive beams in the plurality of first receive beams are equal; or two adjacent receive beams in the plurality of first receive beams are equally spaced; or the plurality of first receive beams are centrosymmetric with respect to the second central axis. This is not limited in embodiments of this application.

In this embodiment of this application, a direction of the second central axis may be a direction indicated by second angle information or third angle information of the sensing target relative to the second node. For the second angle information or the third angle information, refer to the following steps S531 to S536. Details are not described herein again.

In this embodiment of this application, the angle relationship between the plurality of first receive beams meets: An included angle between an m^{th} first receive beam in the plurality of first receive beams and the second central axis is equal to an included angle between a b^{th} first receive beam in the plurality of first receive beams and the second central axis, and an included angle between the m^{th} first receive beam and an (m+1)^{th} first receive beam in the plurality of first receive beams is equal. The m^{th} first receive beam and the (m+1)^{th} first receive beam are two spatially adjacent first receive beams, and m and b are positive integers. For example, an included angle between a 1^{st} first receive beam in the plurality of first receive beams and the second central axis is 6 degrees, and an included angle between a 3^{rd} first receive beam and the second central axis is also 6 degrees, or an included angle between another first receive beam and the second central axis is also 6 degrees. For example, an included angle between the 1^{st} first receive beam and a 2^{nd} first receive beam is equal to an included angle between the 2^{nd} first receive beam and the 3^{rd} first receive beam, and an included angle between a last first receive beam and the 1^{st} first receive beam is equal to the included angle between the 1^{st} first receive beam and the 2^{nd} first receive beam. The rest can be deduced by analogy. This is not limited in embodiments of this application. For example, the included angle between the m^{th} first receive beam in the plurality of first receive beams and the second central axis is represented as $Δψ {2}_{0 , m}^{rx}$, the included angle between the b^{th} first receive beam in the plurality of first receive beams and the second central axis is represented as $Δψ {2}_{0 , b}^{rx}$, and the included angle between the m^{th} first receive beam and the (m+1)^{th} first receive beam is represented as $Δψ {2}_{m , m + 1}^{rx}$*.* The angle relationship between the plurality of first receive beams meets the following relationship: $Δψ {2}_{0 , m}^{rx} = Δψ {2}_{0 , b}^{rx} , and Δψ {2}_{m , m + 1}^{rx}$ is equal.

In this embodiment of this application, $Δψ {2}_{0 , m}^{rx} = acos \left({\vec{v 2}}_{0}⋅{\vec{v 2}}_{m}\right)$, and $Δψ {2}_{m , m + 1}^{rx} = acos \left({\vec{v 2}}_{m}⋅{\vec{v 2}}_{m + 1}\right)$, where *̅v̅*̅2̅₀ represents a vector corresponding to the second central axis, *̅v̅*̅2̅*ₘ* represents a vector corresponding to the m^{th} first receive beam, and *̅v̅*̅2̅_{*m*+1} represents a vector corresponding to the (m+1)^{th} first receive beam.

It should be noted that $Δψ {2}_{1 , M}^{rx} = Δψ {2}_{m , m + 1}^{rx}$, where $Δψ {2}_{1 , M}^{rx}$ represents an included angle between the 1^{st} first receive beam and an M^{th} first receive beam, m ∈ [1, M - 1], and M is a positive integer. In this embodiment of this application, for descriptions of the second central axis and the third relationship, refer to the foregoing descriptions of the first central axis and the first relationship. Details are not described herein again.

For example, $Δψ {2}_{0 , n}^{tx}$ may be k₂Δθ₂. In a possible implementation, a value range of k₂ is [0.01, 2], and Δθ₂ is angular resolution.

It should be noted that the plurality of first receive beams may not meet the third relationship. The plurality of first receive beams are randomly determined, or are determined based on another relationship, or the plurality of first receive beams are determined based on a sensing result, for example, a change of a location of the sensing target. This is not limited in embodiments of this application. It should be noted that the following embodiment is described by using an example in which the plurality of first receive beams meet the third relationship. Details are not described herein again.

In this embodiment of this application, the plurality of first transmit beams are used to carry a plurality of first signals. In other words, each of the plurality of first transmit beams is used to carry one of the plurality of first signals. For example, signal strengths of all of the plurality of first signals may be the same or may be different. This is not limited in embodiments of this application.

In this embodiment of this application, the plurality of first receive beams are used to carry a plurality of first echo signals, and the plurality of first echo signals are echo signals obtained after the sensing target acts on the plurality of first signals.

S520: The first node sends the plurality of first transmit beams. Correspondingly, the second node receives the plurality of first receive beams.

In this embodiment of this application, the plurality of first transmit beams are used for sensing. For example, that the plurality of first transmit beams are used for sensing includes that the plurality of first transmit beams are used to determine a first location of the sensing target. For example, the first location of the sensing target may include first angle information of the sensing target relative to the first node, or may include other information of the sensing target. This is not limited in embodiments of this application. In a possible implementation, the first angle information of the sensing target relative to the first node may be a two-dimensional angle of departure (angle of departure, AOD) of the sensing target relative to the first node. The AOD of the sensing target relative to the first node includes two dimensions, that is, an azimuth of departure (azimuth of departure, AOD) and a zenith of departure (zenith of departure, ZOA). Alternatively, in another implementation, the first angle information of the sensing target relative to the first node may be an angle of departure of the sensing target relative to another dimension of the first node. This is not limited in embodiments of this application.

In this embodiment of this application, the plurality of first receive beams are used for sensing. For example, that the plurality of first receive beams are used for sensing includes that the plurality of first receive beams are used to determine the first location of the sensing target. For example, the first location of the sensing target may include first angle information of the sensing target relative to the second node, or may include other information (for example) of the sensing target. This is not limited in embodiments of this application. In a possible implementation, the first angle information of the sensing target relative to the second node may be a two-dimensional angle of arrival (angle of arrival, AOA) of the sensing target relative to the second node. The AOA of the sensing target relative to the second node includes two dimensions, that is, an azimuth of arrival (azimuth of arrival, AOA) and a zenith of arrival (zenith of arrival, ZOA). Alternatively, in another implementation, the first angle information of the sensing target relative to the second node may be an angle of arrival of the sensing target relative to another dimension of the second node. This is not limited in embodiments of this application.

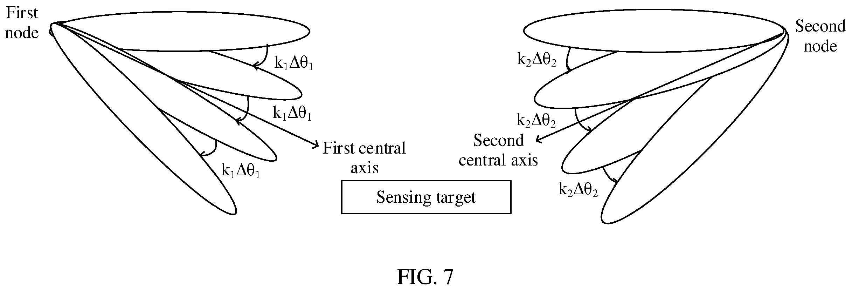

In this embodiment of this application, for ease of understanding, FIG. 7 shows a relative location relationship between the sensing target, the first node, and the second node. As shown in FIG. 7, the first node sends the plurality of first transmit beams, where the plurality of first transmit beams meet the first relationship. For example, the plurality of first transmit beams are symmetrical with respect to the first central axis. The second node receives the plurality of first receive beams, where the plurality of first receive beams meet the third relationship. For example, the plurality of first receive beams are symmetrical with respect to the second central axis.

In this embodiment of this application, the plurality of first transmit beams may be simultaneously sent. For example, the plurality of first transmit beams are simultaneously sent through different subcarriers or different code division. Alternatively, the plurality of first transmit beams may be sequentially sent. This is not limited in embodiments of this application.

In this embodiment of this application, the plurality of first receive beams may be simultaneously received. For example, the plurality of first receive beams are simultaneously received through different subcarriers or different code division. Alternatively, the plurality of first receive beams may be sequentially received. This is not limited in embodiments of this application.

S530: The first node determines the first location of the sensing target. Correspondingly, the second node determines the first location of the sensing target.

In this embodiment of this application, the first location of the sensing target may be determined based on measurement values of the plurality of first echo signals, and the measurement values of the plurality of first echo signals are determined by the second node by measuring the plurality of first echo signals. For example, the measurement value of the first echo signal may be a measurement value of signal strength. Alternatively, for example, the measurement value of the first echo signal may be a measurement value of a signal phase. Alternatively, for example, the measurement value of the first echo signal may be a measurement value of a signal strength and a signal phase. This is not limited in embodiments of this application.

According to the sensing beam sending or receiving method provided in this embodiment of this application, the first node determines and sends the plurality of first transmit beams that meet the first relationship, and the second node determines and receives the plurality of first receive beams that meet the third relationship, so that the first node and the second node can sense the sensing target. When a location of the sensing target does not change, the location of the sensing target determined by the first node and the second node can be more accurate by sending the plurality of first transmit beams and receiving the plurality of first receive beams. When the location of the sensing target changes, the first node and the second node can track the location of the sensing target by sending the plurality of first transmit beams and receiving the plurality of first receive beams.

Optionally, in this embodiment of this application, that the first node determines the plurality of first receive beams includes: The first node determines the plurality of first receive beams based on a third location of the sensing target. As shown in FIG. 5A and FIG. 5B, the sensing beam sending or receiving method provided in this embodiment of this application further includes the following steps.

S531: The first node performs sweeping based on a plurality of first transmit wide beams. Correspondingly, the second node performs sweeping based on a plurality of first receive wide beams.

In this embodiment of this application, the first node performs sweeping based on the plurality of first transmit wide beams, where the plurality of first transmit wide beams are used to carry a plurality of second signals. It should be understood that, that the first node performs sweeping based on the plurality of first transmit wide beams may be understood as that the first node sends the first transmit wide beams in different directions, where each first transmit wide beam is used to carry one second signal. Optionally, the second signal may be an SSB, or may be another signal used for sensing. This is not limited in embodiments of this application.

In this embodiment of this application, the second node performs sweeping based on the plurality of first receive wide beams, where one of the plurality of first receive wide beams carries a second echo signal, and the second echo signal is an echo signal obtained after the sensing target acts on one of the plurality of second signals. It should be understood that, that the second node performs sweeping based on the plurality of first receive wide beams may be understood as that the second node performs sweeping in different directions, and receives the second echo signal in one of the directions.

S532: The second node sends a measurement value of the second echo signal to the first node. Correspondingly, the first node receives the measurement value of the second echo signal from the second node.

In this embodiment of this application, the second node measures the second echo signal to obtain the measurement value of the second echo signal. For example, the measurement value of the second echo signal may be a measurement value of signal strength. Alternatively, for example, the measurement value of the second echo signal may be a measurement value of a signal phase. Alternatively, for example, the measurement value of the second echo signal may be a measurement value of a signal strength and a signal phase. This is not limited in embodiments of this application.

S533: The first node determines a second location of the sensing target based on the measurement value of the second echo signal.

In this embodiment of this application, the second location of the sensing target may be a direction of a first transmit wide beam X in the plurality of first transmit wide beams, and a beam width of the first transmit wide beam X may be a total beam width of a plurality of first sending narrow beams. In this step, the first node and the second node may roughly determine the location of the sensing target, or the first node and the second node may roughly align coarse beams used to sense the sensing target.

In this embodiment of this application, the second location of the sensing target may be the second angle information of the sensing target relative to the first node, or may include other information of the sensing target. The second location of the sensing target may include the second angle information of the sensing target relative to the second node, or may include other information of the sensing target. This is not limited in embodiments of this application.

S534: The first node sends the plurality of first transmit narrow beams in a direction of the second location of the sensing target. Correspondingly, the second node performs sweeping based on a plurality of first receive narrow beams.

In this embodiment of this application, the plurality of first transmit narrow beams are used to carry a plurality of third signals. It should be understood that each of the plurality of first transmit narrow beams is used to carry one third signal. Optionally, the third signal may be a CSI-RS, or may be another signal used for sensing. This is not limited in embodiments of this application.

In this embodiment of this application, the second node performs sweeping based on the plurality of first receive narrow beams, where the plurality of first receive narrow beams are used to carry a plurality of third echo signals, and the plurality of third echo signals are echo signals obtained after the sensing target acts on the plurality of third signals. It should be understood that, that the second node performs sweeping based on the plurality of first receive narrow beams may be understood as that the second node receives the first receive narrow beams from different directions (the different directions are limited to some extent, for example, a direction in which the second node receives a first coarse receive beam of the second echo signal corresponds to an angle range, and the different directions are directions of the angle range). Each first receive narrow beam is used to carry one third echo signal. It should be understood that, in this embodiment of this application, a wide beam and a narrow beam are relative concepts. For example, a coverage angle of the wide beam is greater than a coverage angle of the narrow beam, or a beam width of the wide beam is greater than a beam width of the narrow beam.

S535: The second node sends measurement values of the plurality of third echo signals to the first node. Correspondingly, the first node receives the measurement values of the plurality of third echo signals from the second node.

In this embodiment of this application, the second node measures the plurality of third echo signals, to obtain the measurement values of the plurality of third echo signals. For example, the measurement value of the third echo signal may be a measurement value of signal strength. Alternatively, for example, the measurement value of the third echo signal may be a measurement value of a signal phase. Alternatively, for example, the measurement value of the third echo signal may be a measurement value of a signal strength and a signal phase. This is not limited in embodiments of this application.

S536: The first node determines the third location of the sensing target based on the measurement values of the plurality of third echo signals.

In this embodiment of this application, the first node may determine the third location of the sensing target based on, for example, a measurement value with largest signal strength in the measurement values of the plurality of third echo signals. This is not limited in embodiments of this application. In this embodiment of this application, the third location of the sensing target may be a direction of a first sending narrow beam Y in the plurality of first sending narrow beams. In this step, the first node and the second node may finely determine the location of the sensing target, or the first node and the second node may finely align narrow beams used to sense the sensing target.

In this embodiment of this application, the third location of the sensing target may include the third angle information of the sensing target relative to the first node, or may include other information of the sensing target. The third location of the sensing target may include the third angle information of the sensing target relative to the second node, or may include other information of the sensing target. This is not limited in embodiments of this application.

It should be noted that the first node may determine the plurality of first transmit beams based on the second location that is of the sensing target and that is determined in steps S531 to S533, or the first node may determine the plurality of first transmit beams based on the third location that is of the sensing target and that is determined in steps S531 to S536. Correspondingly, the second node may determine the plurality of first receive beams based on the second location that is of the sensing target and that is determined in steps S531 to S533, or the second node may determine the plurality of first receive beams based on the third location that is of the sensing target and that is determined in steps S531 to S533.

Further, optionally, as shown in FIG. 5A and FIG. 5B, the sensing beam sending or receiving method provided in this embodiment of this application further includes the following steps.

S541: The first node determines a plurality of second transmit beams based on the first location of the sensing target. Correspondingly, the second node determines a plurality of second receive beams based on the first location of the sensing target.

In this embodiment of this application, when the location of the sensing target moves, the first node may determine the plurality of second transmit beams based on the first location of the sensing target. Correspondingly, the second node determines the plurality of second receive beams based on the first location of the sensing target.

In this embodiment of this application, the plurality of second transmit beams meet a second relationship, and the second relationship indicates an angle relationship between the plurality of second transmit beams. In this embodiment of this application, for descriptions of the second relationship, refer to the descriptions of the first relationship. Details are not described herein again.

In this embodiment of this application, the plurality of second receive beams meet a fourth relationship, and the fourth relationship indicates an angle relationship between the plurality of second receive beams. In this embodiment of this application, for descriptions of the fourth relationship, refer to the descriptions of the third relationship. Details are not described herein again.

S542: The first node sends the plurality of second transmit beams. Correspondingly, the second node receives the plurality of second receive beams.

In this embodiment of this application, the plurality of second transmit beams are used for sensing, and the plurality of second receive beams are used for sensing. In this embodiment of this application, for step S542, refer to related descriptions in step S520. Details are not described herein again.

According to the sensing beam sending or receiving method provided in this embodiment of this application, the first node determines and sends the plurality of second transmit beams based on the first location of the sensing target, and the second node determines and sends the plurality of second receive beams based on the first location of the sensing target. The plurality of second transmit beams meet the second relationship, the plurality of second receive beams meet the fourth relationship, so that the first node and the second node can track the location of the sensing target.

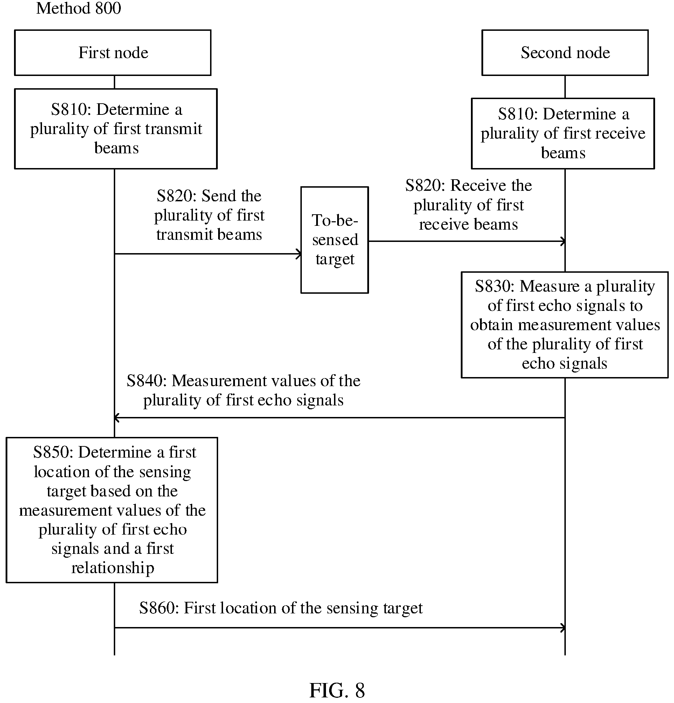

The following describes in detail, by using FIG. 8 to FIG. 10, the sensing beam sending or receiving method provided in embodiments of this application. In a possible implementation, FIG. 8 is a diagram of an example of a sensing beam sending or receiving method according to an embodiment of this application. The method is described by using interaction between a first node and a second node as an example. Certainly, an action of the first node in the method may alternatively be performed by an apparatus/module in the first node, for example, a chip, a processor, or a processing unit in the first node. An action of the second node in the method may alternatively be performed by an apparatus/module in the second node, for example, a chip, a processor, or a processing unit in the second node. This is not specifically limited in embodiments of this application. In this embodiment of this application, the first node may be a network device, and the second node may be a network device or a terminal device. In this embodiment of this application, processing performed by a single execution body (for example, the first node or the second node) may also be divided into processing performed by a plurality of execution bodies, and these execution bodies may be logically and/or physically separated. For example, processing performed by the network device may be performed by at least one of a CU, a DU, and an RU. For another example, processing performed by the network device may be performed by at least one of an O-CU (an O-CU-CP in the O-CU or an O-CU-UP in the O-CU), an O-DU, and an O-RU in an ORAN system. For example, as shown in FIG. 8, a sensing beam sending or receiving method 800 provided in an embodiment of this application includes the following steps.

S810: The first node determines a plurality of first transmit beams. Correspondingly, the second node determines a plurality of first receive beams.

In this embodiment of this application, for step S810, refer to related descriptions in step S510. Details are not described herein again.

S820: The first node sends the plurality of first receive beams. Correspondingly, the second node receives the plurality of first receive beams.

In this embodiment of this application, for step S820, refer to related descriptions in step S520. Details are not described herein again.

S830: The second node measures a plurality of first echo signals to obtain measurement values of the plurality of first echo signals.

In this embodiment of this application, for the measurement value of the first echo signal, refer to the descriptions in the method 500. Details are not described herein again.

S840: The second node sends the measurement values of the plurality of first echo signals to the first node. Correspondingly, the first node receives the measurement values of the plurality of first echo signals from the second node.

S850: The first node determines a first location of a sensing target based on the measurement values of the plurality of first echo signals and a first relationship.

In this embodiment of this application, the first location of the sensing target may include first angle information of the sensing target relative to the first node, and the first location of the sensing target may further include first angle information of the sensing target relative to the second node. For descriptions of the first angle information of the sensing target relative to the first node and the first angle information of the sensing target relative to the second node, refer to related descriptions in the method 500. Details are not described herein again.

S860: The first node sends the first location of the sensing target to the second node. Correspondingly, the second node receives the first location of the sensing target from the first node.

In this embodiment of this application, the first location that is of the sensing target and that is sent by the first node to the second node may include the first angle information of the sensing target relative to the second node. The first angle information of the sensing target relative to the second node may be determined by the first node based on a location of the second node and the first angle information of the sensing target relative to the first node.

According to the sensing beam sending or receiving method provided in this embodiment of this application, the first node determines and sends the plurality of first transmit beams that meet the first relationship, and the second node determines and receives the plurality of first receive beams that meet a third relationship, so that the first node and the second node can sense the sensing target. When a location of the sensing target does not change, the location of the sensing target determined by the first node and the second node can be more accurate by sending the plurality of first transmit beams and receiving the plurality of first receive beams. When the location of the sensing target changes, the first node and the second node can track the location of the sensing target by sending the plurality of first transmit beams and receiving the plurality of first receive beams. Further, the first node determines the first location of the sensing target based on the measurement values of the plurality of first echo signals and the first relationship, so that the first node has a stronger control capability.

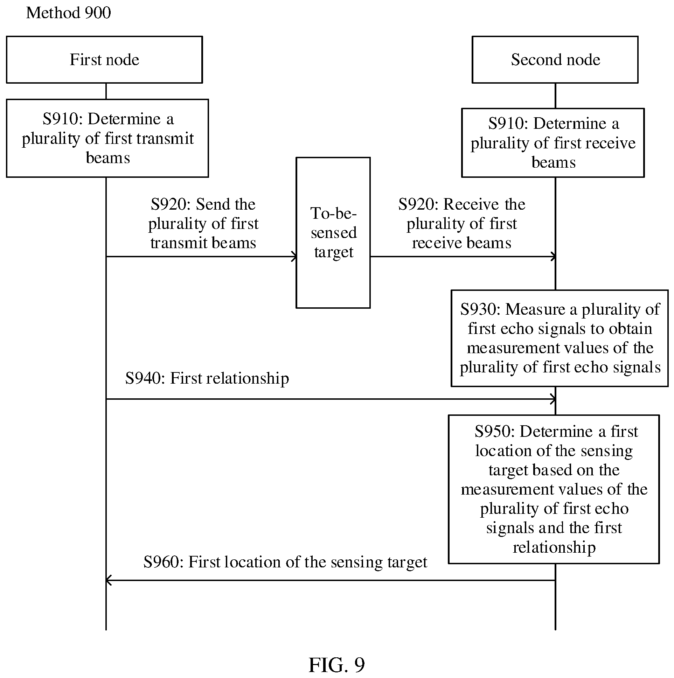

In another possible implementation, FIG. 9 is a diagram of another example of a sensing beam sending or receiving method according to an embodiment of this application. The method is described by using interaction between a first node and a second node as an example. Certainly, an action of the first node in the method may alternatively be performed by an apparatus/module in the first node, for example, a chip, a processor, or a processing unit in the first node. An action of the second node in the method may alternatively be performed by an apparatus/module in the second node, for example, a chip, a processor, or a processing unit in the second node. This is not specifically limited in embodiments of this application. In this embodiment of this application, the first node may be a network device, and the second node may be a network device or a terminal device. In this embodiment of this application, processing performed by a single execution body (for example, the first node or the second node) may also be divided into processing performed by a plurality of execution bodies, and these execution bodies may be logically and/or physically separated. For example, processing performed by the network device may be performed by at least one of a CU, a DU, and an RU. For another example, processing performed by the network device may be performed by at least one of an O-CU (an O-CU-CP in the O-CU or an O-CU-UP in the O-CU), an O-DU, and an O-RU in an ORAN system. For example, as shown in FIG. 9, a sensing beam sending or receiving method 900 provided in an embodiment of this application includes the following steps.

S910: The first node determines a plurality of first transmit beams. Correspondingly, the second node determines a plurality of first receive beams.

In this embodiment of this application, for step S910, refer to related descriptions in step S510. Details are not described herein again.

S920: The first node sends the plurality of first receive beams. Correspondingly, the second node receives the plurality of first receive beams.

In this embodiment of this application, for step S920, refer to related descriptions in step S520. Details are not described herein again.

S930: The second node measures a plurality of first echo signals to obtain measurement values of the plurality of first echo signals.

In this embodiment of this application, for descriptions of the measurement values of the plurality of first echo signals, refer to the descriptions in the method 500. Details are not described herein again.

S940: The first node sends a first relationship to the second node. Correspondingly, the second node receives the first relationship from the first node.

S950: The second node determines a first location of a sensing target based on the first relationship and the measurement values of the plurality of first echo signals.

In this embodiment of this application, the first location of the sensing target may include first angle information of the sensing target relative to the second node, and the first location of the sensing target may further include first angle information of the sensing target relative to the first node. For descriptions of the first angle information of the sensing target relative to the first node and the first angle information of the sensing target relative to the second node, refer to related descriptions in the method 500. Details are not described herein again. The first angle information of the second node relative to the sensing target may be determined by the second node based on a location of the second node and the first angle information of the first node relative to the sensing target.

S960: The second node sends the first location of the sensing target to the first node. Correspondingly, the first node receives the first location of the sensing target from the second node.

In this embodiment of this application, the first location that is of the sensing target and that is sent by the second node to the first node may include the first angle information of the sensing target relative to the first node. For the first angle information of the sensing target relative to the first node, refer to the descriptions in the method 500. Details are not described herein again.

According to the sensing beam sending or receiving method provided in this embodiment of this application, the first node determines and sends the plurality of first transmit beams that meet the first relationship, and the second node determines and receives the plurality of first receive beams that meet a third relationship, so that the first node and the second node can sense the sensing target. When a location of the sensing target does not change, the location of the sensing target determined by the first node and the second node can be more accurate by sending the plurality of first transmit beams and receiving the plurality of first receive beams. When the location of the sensing target changes, the first node and the second node can track the location of the sensing target by sending the plurality of first transmit beams and receiving the plurality of first receive beams. Further, the second node determines the first location of the sensing target based on the measurement values of the plurality of first echo signals and the first relationship, so that the second node has a stronger control capability.

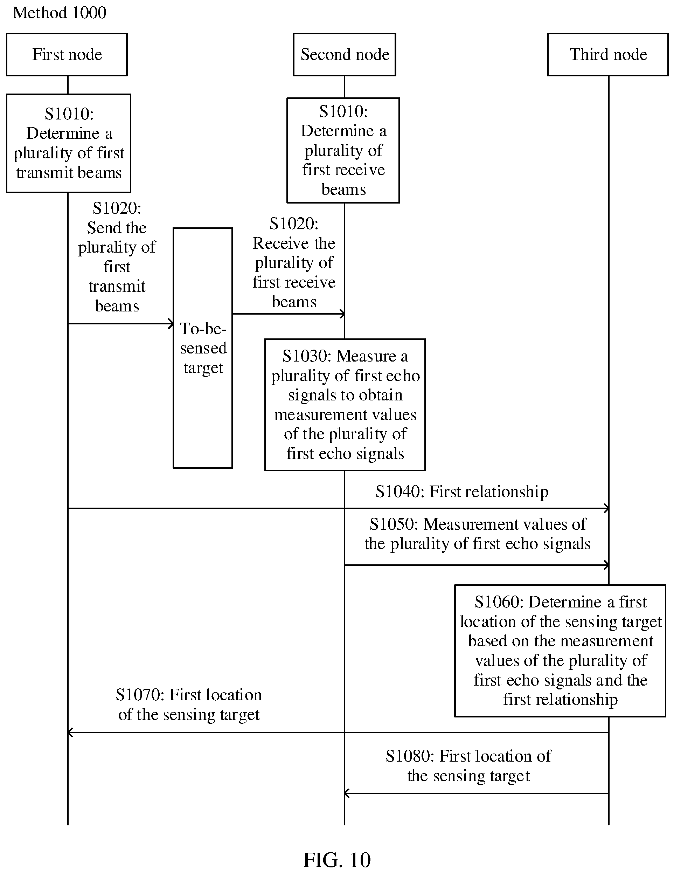

Alternatively, in still another possible implementation, FIG. 10 is a diagram of another example of a sensing beam sending or receiving method according to an embodiment of this application. The method is described by using interaction between a first node and a second node as an example. Certainly, an action of the first node in the method may alternatively be performed by an apparatus/module in the first node, for example, a chip, a processor, or a processing unit in the first node. An action of the second node in the method may alternatively be performed by an apparatus/module in the second node, for example, a chip, a processor, or a processing unit in the second node. This is not specifically limited in embodiments of this application. In this embodiment of this application, the first node may be a network device, and the second node may be a network device or a terminal device. In this embodiment of this application, processing performed by a single execution body (for example, the first node or the second node) may also be divided into processing performed by a plurality of execution bodies, and these execution bodies may be logically and/or physically separated. For example, processing performed by the network device may be performed by at least one of a CU, a DU, and an RU. For another example, processing performed by the network device may be performed by at least one of an O-CU (an O-CU-CP in the O-CU or an O-CU-UP in the O-CU), an O-DU, and an O-RU in an ORAN system. For example, as shown in FIG. 10, a sensing beam sending or receiving method 1000 provided in an embodiment of this application includes the following steps.

S1010: The first node determines a plurality of first transmit beams. Correspondingly, the second node determines a plurality of first receive beams.

In this embodiment of this application, for step S1010, refer to related descriptions in step S510. Details are not described herein again.

S1020: The first node sends the plurality of first transmit beams. Correspondingly, the second node receives the plurality of first receive beams.

In this embodiment of this application, for step S1020, refer to related descriptions in step S520. Details are not described herein again.

S1030: The second node measures a plurality of first echo signals to obtain measurement values of the plurality of first echo signals.

In this embodiment of this application, for descriptions of the measurement values of the plurality of first echo signals, refer to the descriptions in the method 500. Details are not described herein again.

S1040: The first node sends a first relationship to a third node. Correspondingly, the third node receives the first relationship from the first node.

S1050: The second node sends the measurement values of the plurality of first echo signals to the third node. Correspondingly, the third node receives the measurement values of the plurality of first echo signals from the second node.

It should be understood that a sequence of step S1040 and step S1050 is not limited.

S1060: The third node determines a first location of a sensing target based on the first relationship and the measurement values of the plurality of first echo signals.

In this embodiment of this application, the first location of the sensing target may include first angle information of the sensing target relative to the second node, and the first location of the sensing target may further include first angle information of the sensing target relative to the first node. For descriptions of the first angle information of the sensing target relative to the first node and the first angle information of the sensing target relative to the second node, refer to related descriptions in the method 500. Details are not described herein again.

S1070: The third node sends the first location of the sensing target to the first node. Correspondingly, the first node receives, from the third node, the first location information of the sensing target relative to the first node.

In this embodiment of this application, the first location that is of the sensing target and that is sent by the third node to the first node may include the first angle information of the sensing target relative to the first node. For the first angle information of the sensing target relative to the first node, refer to the descriptions in the method 500. Details are not described herein again.

S1080: The third node sends the first location of the sensing target to the second node. Correspondingly, the second node receives the first location of the sensing target from the third node.

In this embodiment of this application, the first location that is of the sensing target and that is sent by the third node to the second node may include the first angle information of the sensing target relative to the second node. For the first angle information of the sensing target relative to the second node, refer to the descriptions in the method 500. Details are not described herein again.

It should be understood that a sequence of step S1070 and step S1080 is not limited.

According to the sensing beam sending or receiving method provided in this embodiment of this application, the first node determines and sends the plurality of first transmit beams that meet the first relationship, and the second node determines and receives the plurality of first receive beams that meet a third relationship, so that the first node and the second node can sense the sensing target. When a location of the sensing target does not change, the location of the sensing target determined by the first node and the second node can be more accurate by sending the plurality of first transmit beams and receiving the plurality of first receive beams. When the location of the sensing target changes, the first node and the second node can track the location of the sensing target by sending the plurality of first transmit beams and receiving the plurality of first receive beams. Further, the third node determines the first location of the sensing target based on the measurement values of the plurality of first echo signals and the first relationship, so that the third node is used as a dedicated compute node to determine the first location of the sensing target, and the first node and the second node do not need to perform computing. This simplifies a procedure of the first node and the second node.

For the sensing beam sending or receiving methods described in FIG. 8 to FIG. 10, it should be understood that, optionally, the first node may determine the plurality of first receive beams based on a third location of the sensing target. For a step in which the first node determines the plurality of first receive beams based on the third location of the sensing target, refer to the descriptions in steps S531 to S536. Details are not described herein again. Optionally, the first node and the second node may further track the sensing target based on the foregoing steps S541 and S542. Details are not described herein again.

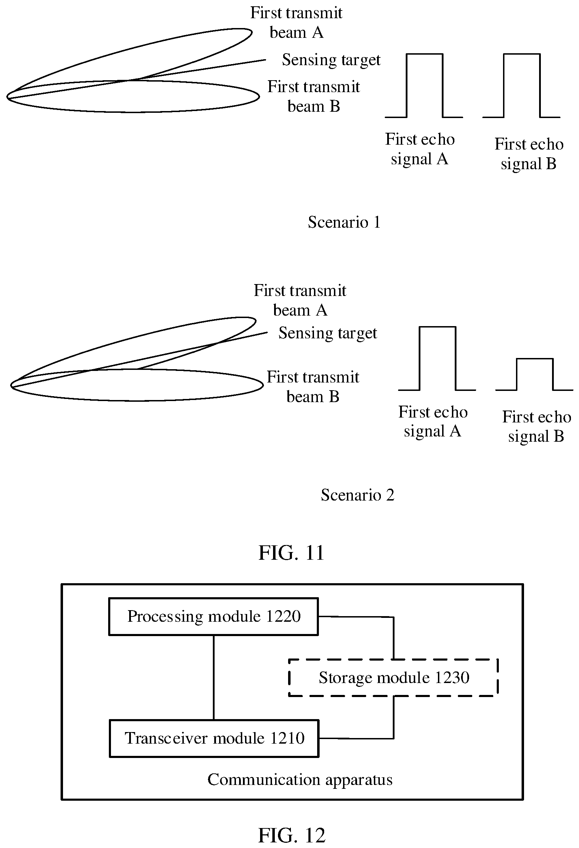

For the sensing beam sending or receiving methods described in FIG. 8 to FIG. 10, FIG. 11 is a diagram in which a first node/a second node/a third node determines a first location of a sensing target based on measurement values of a plurality of first echo signals and a plurality of first relationships according to an embodiment of this application. As shown in FIG. 11, an example in which the plurality of first echo signals are two first echo signals is used for description. The first node sends a first transmit beam A and a first transmit beam B, and the second node receives a first receive beam A and a first receive beam B. For a scenario 1, a first echo signal A carried by the first receive beam A and a first echo signal B carried by the first receive beam B are shown in FIG. 11. It can be learned that the first echo signal A and the first echo signal B are the same. Therefore, measurement values corresponding to the first echo signal A and the first echo signal B are the same, and the first node/the second node/the third node may determine, based on the same measurement values and the first relationship, that a location of the sensing target does not change. For a scenario 2, a first echo signal A carried by the first receive beam A and a first echo signal B carried by the first receive beam B are shown in FIG. 11. It can be learned that a measurement value of the first echo signal A is greater than a measurement value of the first echo signal B, the first node/the second node/the third node may determine, based on different measurement values and the first relationship, that a location of the sensing target changes, and the sensing target offsets toward a direction of the first receive beam A. Optionally, the first node/the second node/the third node may determine the measurement value according to a sum and difference beam method.

It should be noted that, in the foregoing embodiment, for communication-related steps (for example, the second node sends the measurement value to the first node, the first node sends the first relationship to the second node, the first node sends the first relationship to the third node, and the second node sends the measurement value to the third node), information may be exchanged through beams determined by using procedures P1, P2, and P3 described in related technologies in embodiments of this application. This is not limited in embodiments of this application.

The solutions provided in embodiments of this application are mainly described above from a perspective of interaction between the first node and the second node. Correspondingly, an embodiment of this application further provides a communication apparatus. The communication apparatus is configured to implement the foregoing methods. The communication apparatus may be the first node in the foregoing method embodiments, an apparatus including the first node, or a component that can be used for the first node. Alternatively, the communication apparatus may be the second node in the foregoing method embodiments, an apparatus including the second node, or a component that can be used for the second node. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is executed in a manner of hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that module division in embodiments of this application is an example, and is only logical function division. During actual implementation, there may be another division manner.

For example, FIG. 12 is a diagram of a communication apparatus according to an embodiment of this application. For example, the communication apparatus is the first node (which may be a chip of the first node, a module of the first node, or an internal apparatus of the first node) in the foregoing method embodiments. The first node includes a transceiver module 1210 and a processing module 1220. The transceiver module 1210 may also be referred to as a transceiver unit, and is configured to implement a transceiver function. For example, the transceiver module 1210 may be a transceiver circuit, a transceiver machine, a transceiver, or a communication interface.

In this embodiment of this application, the processing module 1220 is configured to determine a plurality of first transmit beams. The plurality of first transmit beams meet a first relationship, the first relationship indicates an angle relationship between the plurality of first transmit beams, and the plurality of first transmit beams are used to carry a plurality of first signals.

In this embodiment of this application, the transceiver module 1210 is configured to send the plurality of first transmit beams, where the plurality of first transmit beams are used for sensing.

All related content of the steps in the foregoing method embodiments may be cited in function descriptions of the corresponding functional modules. Details are not described herein again. Optionally, the communication apparatus may further include a storage module 1230. The storage module 1230 may be configured to store instructions and/or data. The processing module 1220 may read the instructions and/or the data in the storage module 1230.

In this embodiment of this application, the first node is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the terminal device may be in a form of the communication apparatus shown in FIG. 4.

For example, the processor 401 in the communication apparatus shown in FIG. 4 may invoke the computer-executable instructions stored in the memory 403, so that the communication apparatus performs the communication method in the foregoing method embodiments.

Specifically, functions/implementation processes of the transceiver module 1210 and the processing module 1220 in FIG. 12 may be implemented by the processor 401 in the communication apparatus shown in FIG. 4 by invoking the computer-executable instructions stored in the memory 403. Alternatively, a function/an implementation process of the processing module 1220 in FIG. 12 may be implemented by the processor 401 in the communication apparatus shown in FIG. 4 by invoking the computer-executable instructions stored in the memory 403, and a function/an implementation process of the transceiver module 1210 in FIG. 12 may be implemented through the communication interface 404 in the communication apparatus shown in FIG. 4.

The first node (which may be the chip of the first node, the module of the first node, or the internal apparatus of the first node) provided in this embodiment of this application may perform the foregoing sensing beam sending or receiving method. Therefore, for technical effect that can be implemented by the first node, refer to the foregoing method embodiments. Details are not described herein again.

Alternatively, for example, the communication apparatus is the second node (which may be a chip of the second node, a module of the second node, or an internal apparatus of the second node) in the foregoing method embodiments. The second node includes a transceiver module 1210 and a processing module 1220. The transceiver module 1210 may also be referred to as a transceiver unit, and is configured to implement a transceiver function. For example, the transceiver module 1210 may be a transceiver circuit, a transceiver machine, a transceiver, or a communication interface.

In this embodiment of this application, the processing module 1220 is configured to determine a plurality of first receive beams. The plurality of first receive beams meet a third relationship, and the third relationship indicates an angle relationship between the plurality of first receive beams. The plurality of first receive beams are used to carry a plurality of first echo signals, and the plurality of first echo signals are echo signals obtained after a sensing target acts on a plurality of first signals. The plurality of first signals are carried on a plurality of first transmit beams, the plurality of first transmit beams meet a first relationship, and the first relationship indicates an angle relationship between the plurality of first transmit beams.

In this embodiment of this application, the transceiver module 1210 is configured to receive the plurality of first receive beams, where the plurality of first receive beams are used for sensing.

All related content of the steps in the foregoing method embodiments may be cited in function descriptions of the corresponding functional modules. Details are not described herein again. Optionally, the communication apparatus may further include a storage module 1230. The storage module 1230 may be configured to store instructions and/or data. The processing module 1220 may read the instructions and/or the data in the storage module 1230.

In this embodiment of this application, the second node is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the terminal device may be in a form of the communication apparatus shown in FIG. 4.

For example, the processor 401 in the communication apparatus shown in FIG. 4 may invoke the computer-executable instructions stored in the memory 403, so that the communication apparatus performs the communication method in the foregoing method embodiments.

Specifically, functions/implementation processes of the transceiver module 1210 and the processing module 1220 in FIG. 12 may be implemented by the processor 401 in the communication apparatus shown in FIG. 4 by invoking the computer-executable instructions stored in the memory 403. Alternatively, a function/an implementation process of the processing module 1220 in FIG. 12 may be implemented by the processor 401 in the communication apparatus shown in FIG. 4 by invoking the computer-executable instructions stored in the memory 403, and a function/an implementation process of the transceiver module 1210 in FIG. 12 may be implemented through the communication interface 404 in the communication apparatus shown in FIG. 4.

The second node (which may be the chip of the second node, the module of the second node, or the internal apparatus of the second node) provided in this embodiment of this application may perform the foregoing sensing beam sending or receiving method. Therefore, for technical effect that can be implemented by the second node, refer to the foregoing method embodiments. Details are not described herein again.

Alternatively, for example, the communication apparatus is the third node (which may be a chip of the third node, a module of the third node, or an internal apparatus of the third node) in the foregoing method embodiments. The third node includes a transceiver module 1210 and a processing module 1220. The transceiver module 1210 may also be referred to as a transceiver unit, and is configured to implement a transceiver function. For example, the transceiver module 1210 may be a transceiver circuit, a transceiver machine, a transceiver, or a communication interface.

In this embodiment of this application, the transceiver module 1210 is configured to receive a first relationship from a first node and measurement values of a plurality of first echo signals from a second node. The first relationship indicates an angle relationship between a plurality of first transmit beams, and the plurality of first transmit beams are used to carry a plurality of first signals. The plurality of first echo signals are echo signals obtained after a sensing target acts on the first signals, and the plurality of first echo signals are carried on a plurality of first receive beams. The plurality of first receive beams meet a third relationship, the third relationship indicates an angle relationship between the plurality of first receive beams, and the plurality of first transmit beams and the plurality of first receive beams are used for sensing.

The processing module 1220 is configured to determine a first location of the sensing target based on the first relationship and the measurement values of the plurality of first echo signals.

All related content of the steps in the foregoing method embodiments may be cited in function descriptions of the corresponding functional modules. Details are not described herein again. Optionally, the communication apparatus may further include a storage module 1230. The storage module 1230 may be configured to store instructions and/or data. The processing module 1220 may read the instructions and/or the data in the storage module 1230.

In this embodiment of this application, the third node is presented in a form of function modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the terminal device may be in a form of the communication apparatus shown in FIG. 4.

For example, the processor 401 in the communication apparatus shown in FIG. 4 may invoke the computer-executable instructions stored in the memory 403, so that the communication apparatus performs the communication method in the foregoing method embodiments.

Specifically, functions/implementation processes of the transceiver module 1210 and the processing module 1220 in FIG. 12 may be implemented by the processor 401 in the communication apparatus shown in FIG. 4 by invoking the computer-executable instructions stored in the memory 403. Alternatively, a function/an implementation process of the processing module 1220 in FIG. 12 may be implemented by the processor 401 in the communication apparatus shown in FIG. 4 by invoking the computer-executable instructions stored in the memory 403, and a function/an implementation process of the transceiver module 1210 in FIG. 12 may be implemented through the communication interface 404 in the communication apparatus shown in FIG. 4.

The third node (which may be the chip of the third node, the module of the third node, or the internal apparatus of the third node) provided in this embodiment of this application may perform the foregoing sensing beam sending or receiving method. Therefore, for technical effect that can be implemented by the third node, refer to the foregoing method embodiments. Details are not described herein again.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built in an SoC or ASIC, or may be an independent semiconductor chip. In addition to the core configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method according to any one of the foregoing method embodiments or any implementation of the method embodiment.

Optionally, an embodiment of this application further provides a communication system. The communication system includes the first node in the foregoing method embodiments and the second node in the foregoing method embodiments. Optionally, the communication system further includes the third node in the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A sensing beam sending method, applied to a first node, and comprising:
determining a plurality of first transmit beams, wherein the plurality of first transmit beams meet a first relationship, the first relationship indicates an angle relationship between the plurality of first transmit beams, and the plurality of first transmit beams are used to carry a plurality of first signals; and
sending the plurality of first transmit beams, wherein the plurality of first transmit beams are used for sensing.

2. The method according to claim 1, wherein that the first relationship indicates the angle relationship between the plurality of first transmit beams comprises: the first relationship indicates included angles between the plurality of first transmit beams and a first central axis.

3. The method according to claim 1 or 2, wherein moduli of angle differences between adjacent first transmit beams in the plurality of first transmit beams are equal.

4. The method according to any one of claims 1 to 3, wherein the angle relationship between the plurality of first transmit beams meets: an included angle between an n^{th} first transmit beam in the plurality of first transmit beams and the first central axis is equal to an included angle between an a^{th} first transmit beam in the plurality of first transmit beams and the first central axis, and an included angle between the n^{th} first transmit beam and an (n+1)^{th} first transmit beam in the plurality of first transmit beams is equal, wherein the n^{th} first transmit beam and the (n+1)^{th} first transmit beam are two spatially adjacent first transmit beams, and n and a are positive integers.

5. The method according to claim 4, wherein the included angle between the n^{th} first transmit beam in the plurality of first transmit beams and the first central axis is represented as $Δψ {1}_{0 , n}^{tx}$, the included angle between the a^{th} first transmit beam in the plurality of first transmit beams and the first central axis is represented as $Δψ {1}_{0 , a}^{tx}$, the included angle between the n^{th} first transmit beam and the (n+1)^{th} first transmit beam is represented as $Δψ {1}_{n , n + 1}^{tx}$; and the angle relationship between the plurality of first transmit beams satisfies: $Δψ {1}_{0 , n}^{tx} = Δψ {1}_{0 , a}^{tx} , and Δψ {1}_{n , n + 1}^{tx}$ is equal.

6. The method according to any one of claims 1 to 5, wherein that the plurality of first transmit beams are used for sensing comprises: the plurality of first transmit beams are used to determine a first location of a sensing target.

7. The method according to claim 6, wherein the first location of the sensing target comprises first angle information of the sensing target relative to the first node.

8. The method according to any one of claims 1 to 7, comprising:
receiving measurement values of a plurality of first echo signals from a second node, wherein the plurality of first echo signals are echo signals obtained after the sensing target acts on the plurality of first signals carried on the plurality of first transmit beams; and
determining the first location of the sensing target based on the measurement values of the plurality of first echo signals and the first relationship.

9. The method according to any one of claims 1 to 7, comprising:
receiving the first location of the sensing target from a second node, wherein the first location of the sensing target is determined by the second node based on the first relationship and measurement values of a plurality of first echo signals, and the plurality of first echo signals are echo signals obtained after the sensing target acts on the plurality of first signals carried on the plurality of first transmit beams.

10. The method according to claim 9, wherein the method further comprises:
sending the first relationship to the second node; or sending the first relationship to a third node.

11. The method according to any one of claims 6 to 10, wherein the method further comprises:
determining a plurality of second transmit beams based on the first location of the sensing target, wherein the plurality of second transmit beams meet a second relationship, the second relationship indicates an angle relationship between the plurality of second transmit beams, and the plurality of second transmit beams are used to carry a plurality of fourth signals; and
sending the plurality of second transmit beams, wherein the plurality of second transmit beams are used for sensing.

12. The method according to any one of claims 1 to 11, wherein the method further comprises:
performing sweeping based on a plurality of first transmit wide beams, and determining a second location of the sensing target based on a measurement value of a second echo signal, wherein the second echo signal is an echo signal obtained after the sensing target acts on one of a plurality of second signals carried on the plurality of first transmit wide beams; and
sending a plurality of first transmit narrow beams in a direction of the second location of the sensing target, and determining a third location of the sensing target based on measurement values of a plurality of third echo signals carried on a plurality of first receive narrow beams, wherein the plurality of third echo signals are echo signals obtained after the sensing target acts on a plurality of third signals carried on the plurality of first transmit narrow beams; and
determining the plurality of first transmit beams comprises: determining the plurality of first transmit beams based on the third location of the sensing target.

13. The method according to any one of claims 9 to 12, wherein the measurement value is a measurement value of signal strength, and/or the measurement value is a measurement value of a signal phase.

14. The method according to any one of claims 1 to 13, wherein the plurality of first transmit beams are simultaneously sent, or the plurality of first transmit beams are sequentially sent.

15. A sensing beam receiving method, applied to a second node, and comprising:
determining a plurality of first receive beams, wherein the plurality of first receive beams meet a third relationship, the third relationship indicates an angle relationship between the plurality of first receive beams, the plurality of first receive beams are used to carry a plurality of first echo signals, the plurality of first echo signals are echo signals obtained after a sensing target acts on a plurality of first signals, the plurality of first signals are carried on a plurality of first transmit beams, the plurality of first transmit beams meet a first relationship, and the first relationship indicates an angle relationship between the plurality of first transmit beams; and
receiving the plurality of first receive beams, wherein the plurality of first receive beams are used for sensing.

16. The method according to claim 15, wherein that the third relationship indicates the angle relationship between the plurality of first receive beams comprises: the third relationship indicates included angles between the plurality of first receive beams and a second central axis.

17. The method according to claim 15 or 16, wherein moduli of angle differences between adjacent first receive beams in the plurality of first receive beams are equal.

18. The method according to any one of claims 15 to 17, wherein the angle relationship between the plurality of first receive beams meets: an included angle between an m^{th} first receive beam in the plurality of first receive beams and the second central axis is equal to an included angle between a b^{th} first receive beam in the plurality of first receive beams and the second central axis, and an included angle between the m^{th} first receive beam and an (m+1)^{th} first receive beam in the plurality of first receive beams is equal, wherein the m^{th} first receive beam and the (m+1)^{th} first receive beam are two spatially adjacent first receive beams, and m and b are positive integers.

19. The method according to claim 18, wherein the included angle between the m^{th} first receive beam in the plurality of first receive beams and the second central axis is represented as $Δψ {2}_{0 , m}^{rx}$, the included angle between the b^{th} first receive beam in the plurality of first receive beams and the second central axis is represented as $Δψ {2}_{0 , b}^{rx}$, the included angle between the m^{th} first receive beam and the (m+1)^{th} first receive beam is represented as $Δψ {2}_{m , m + 1}^{rx}$; and the angle relationship between the plurality of first receive beams satisfies the following relationship: $Δψ {2}_{0 , m}^{rx} = Δψ {2}_{0 , b}^{rx} , and Δψ {2}_{m , m + 1}^{rx}$ is equal.

20. The method according to any one of claims 15 to 19, wherein that the plurality of first receive beams are used for sensing comprises: the plurality of first receive beams are used to determine a first location of the sensing target.

21. The method according to claim 20, wherein the first location of the sensing target comprises first angle information of the sensing target relative to the second node.

22. The method according to any one of claims 16 to 21, wherein the method further comprises:
measuring the plurality of first echo signals, to obtain measurement values of the plurality of first echo signals.

23. The method according to claim 22, wherein the method further comprises:
sending the measurement values of the plurality of first echo signals to a first node, or sending the measurement values of the plurality of first echo signals to a third node, or sending the first location of the sensing target to the first node.

24. The method according to claim 23, comprising:
receiving the first relationship from the first node; and
determining the first location of the sensing target based on the first relationship and the measurement values of the plurality of first echo signals.

25. The method according to any one of claims 20 to 24, wherein the method further comprises:
determining a plurality of second receive beams based on the first location of the sensing target, wherein the plurality of second receive beams meet a fourth relationship, the fourth relationship indicates an angle relationship between the plurality of second receive beams, the plurality of second receive beams are used to carry a plurality of fourth echo signals, the plurality of fourth echo signals are echo signals obtained after the sensing target acts on a plurality of fourth signals, the plurality of fourth signals are carried on a plurality of second transmit beams, the plurality of second transmit beams meet a second relationship, and the second relationship indicates an angle relationship between the plurality of second transmit beams; and
receiving the plurality of second receive beams, wherein the plurality of second receive beams are used for sensing.

26. The method according to any one of claims 15 to 25, wherein the method further comprises:
sending a measurement value of a second echo signal, wherein the measurement value of the second echo signal is used to determine a second location of the sensing target, and the second echo signal is an echo signal obtained after the sensing target acts on one of a plurality of second signals carried on a plurality of first transmit wide beams; and
sending measurement values of a plurality of third echo signals carried on a plurality of first receive narrow beams, wherein the measurement values of the plurality of third echo signals are used to determine a third location of the sensing target, and the plurality of third echo signals are signals obtained after the sensing target acts on a plurality of third signals carried on a plurality of first transmit narrow beams; and
determining the plurality of first receive beams comprises: determining the plurality of first receive beams based on the third location of the sensing target.

27. The method according to any one of claims 22 to 26, wherein the measurement value is a measurement value of signal strength, and/or the measurement value is a measurement value of a signal phase.

28. The method according to any one of claims 15 to 27, wherein the plurality of first receive beams are simultaneously received, or the plurality of first receive beams are sequentially received.

29. A communication method, applied to a third node, and comprising:
receiving a first relationship from a first node and measurement values of a plurality of first echo signals from a second node, wherein the first relationship indicates an angle relationship between a plurality of first transmit beams, the plurality of first transmit beams are used to carry a plurality of first signals, the plurality of first echo signals are echo signals obtained after a sensing target acts on the first signals, the plurality of first echo signals are carried on a plurality of first receive beams, the plurality of first receive beams meet a third relationship, the third relationship indicates an angle relationship between the plurality of first receive beams, and the plurality of first transmit beams and the plurality of first receive beams are used for sensing; and
determining a first location of the sensing target based on the first relationship and the measurement values of the plurality of first echo signals.

30. A communication apparatus, wherein the communication apparatus comprises a module configured to perform the method according to any one of claims 1 to 14, or comprises a module configured to perform the method according to any one of claims 15 to 28, or comprises a module configured to perform the method according to claim 29.

31. A communication apparatus, wherein the communication apparatus comprises a processor, wherein the processor is configured to perform the method according to any one of claims 1 to 14, or enable the communication apparatus to perform the method according to any one of claims 15 to 28, or enable the communication apparatus to perform the method according to claim 29.

32. A computer-readable storage medium, wherein the computer-readable storage medium comprises instructions, and when the instructions are run, the method according to any one of claims 1 to 14 is implemented, or the method according to any one of claims 15 to 28 is implemented, or the method according to claim 29 is implemented.

33. A computer program product, wherein the computer program product comprises instructions, and when the instructions are run, the method according to any one of claims 1 to 14 is implemented, or the method according to any one of claims 15 to 28 is implemented, or the method according to claim 29 is implemented.

34. A communication system, wherein the communication system comprises the communication apparatus according to claim 30 and claim 31.
